(19) Europäisches Patentamt / European Patent Office / Office européen des brevets

(11) EP 4 424 850 A1

(12) **EUROPEAN PATENT APPLICATION**
published in accordance with Art. 153(4) EPC

(43) Date of publication:
04.09.2024 Bulletin 2024/36

(21) Application number: 22886984.8

(22) Date of filing: 25.10.2022

(51) International Patent Classification (IPC):
C21D 8/06 (2006.01)  C22C 38/00 (2006.01)
C22C 38/60 (2006.01)

(52) Cooperative Patent Classification (CPC):
C21D 8/06; C22C 38/00; C22C 38/60; Y02P 10/20

(86) International application number:
PCT/JP2022/039622

(87) International publication number:
WO 2023/074657 (04.05.2023 Gazette 2023/18)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 26.10.2021 JP 2021174913

(71) Applicant: NIPPON STEEL CORPORATION
Chiyoda-ku
Tokyo 100-8071 (JP)

(72) Inventors:
- KANKI, Kyohei
  Tokyo 100-8071 (JP)
- MATSUO, Daisuke
  Tokyo 100-8071 (JP)
- TAKABE, Hideki
  Tokyo 100-8071 (JP)
- NISHIMURA, Toshiya
  Tokyo 100-8071 (JP)

(74) Representative: Zimmermann & Partner
Patentanwälte mbB
Postfach 330 920
80069 München (DE)

(54) **MARTENSITIC STAINLESS STEEL ROUND BAR**

(57) A martensitic stainless steel round bar that has high strength, excellent SSC resistance, and excellent SCC resistance in an environment of 175°C is provided. A martensitic stainless steel round bar of the present disclosure contains, in mass%, C: 0.030% or less, Cr: 10.00 to 14.00%, Ni: 5.00 to 7.50%, Mo: 1.50 to 4.00%, Cu: 1.00 to 3.50%, W: 0.01 to 2.00%, and Co: 0.010 to 0.500%, and has a yield strength of 862 MPa or more. When, at the center position of a cross section perpendicular to the axial direction of the martensitic stainless steel round bar, a dissolved Mo concentration in percent by mass is defined as [Mo]c, a dissolved W concentration in percent by mass is defined as [W]c, an Mo concentration in percent by mass in a residue obtained by constant-current electrolysis is defined as $[Mo]_R$, and a W concentration in percent by mass in the residue is defined as $[W]_R$, Formula (1) and Formula (2) are satisfied.

$$F1 = [Mo]_C + 0.5[W]_C \geq 2.45 \quad (1)$$

$$F2 = F1/([Mo]_R + [W]_R) \geq 13.0 \quad (2)$$

FIG. 2

**Description**

TECHNICAL FIELD

The present disclosure relates to a martensitic stainless steel round bar, and more particularly relates to a martensitic stainless steel round bar that is suitable as a starting material for a downhole tool that is utilized in an oil well hole (downhole). Here, the term "round steel bar" means a steel bar that has a circular shape in a cross section perpendicular to the axial direction. Note that, in the present description, oil wells and gas wells are also collectively referred to simply as "oil wells".

BACKGROUND ART

Oil country tubular goods such as casing pipes and tubing pipes are utilized for drilling oil wells. Downhole tools are also utilized for drilling oil wells.

When drilling an oil well, an oil well hole is formed with casing pipes. Downhole tools are inserted into the formed oil well hole. Downhole tools are tools that are used for oil well exploration and oil well drilling applications. Examples of downhole tools include a plug, a packer, and a drill bit. A plug or a packer is used to plug a predetermined area within an oil well hole in order to perform fracturing. Drill bits are used for drilling oil well holes.

A cross section that is perpendicular to the pipe axis direction of an oil country tubular good has a hollow ring shape. On the other hand, unlike oil country tubular goods, downhole tools may have a solid central portion in the cross section perpendicular to the axial direction. Therefore, when producing a downhole tool, a solid-core round steel bar is used as a starting material. In some cases, the central portion of the cross section perpendicular to the axial direction of the round steel bar that is the starting material may become a part of the downhole tool as it is.

As described above, downhole tools are used in similar environments to oil country tubular goods which are used for casing pipes and tubing pipes and the like. The production fluid of an oil well includes corrosive gases such as hydrogen sulfide gas and carbon dioxide gas. Therefore, similarly to oil country tubular goods, a round steel bar that will serve as the starting material for a downhole tool is required to have excellent sulfide stress cracking resistance and excellent stress corrosion cracking resistance. Hereinafter, sulfide stress cracking resistance is referred to as "SSC resistance", and stress corrosion cracking resistance is referred to as "SCC resistance". Here, SSC is an abbreviation of "sulfide stress cracking". SCC is an abbreviation of "stress corrosion cracking".

As described above, unlike oil country tubular goods, a round steel bar that will serve as a starting material for a downhole tool is, in particular, required to also have excellent SSC resistance and excellent SCC resistance at a solid portion at the center position of the cross section perpendicular to the axial direction.

A round steel bar to serve as a starting material for a downhole tool which is excellent in SSC resistance and SCC resistance is proposed in International Application Publication No. WO2017/200083 (Patent Literature 1).

A round steel bar disclosed in Patent Literature 1 has a chemical composition consisting of, in mass%, C: 0.020% or less, Si: 1.0% or less, Mn: 1.0% or less, P: 0.03% or less, S: 0.01% or less, Cu: 0.10 to 2.50%, Cr: 10 to 14%, Ni: 1.5 to 7.0%, Mo: 0.2 to 3.0%, Ti: 0.05 to 0.3%, V: 0.01 to 0.10%, Nb: 0.1% or less, Al: 0.001 to 0.1%, N: 0.05% or less, B: 0 to 0.005%, Ca: 0 to 0.008%, and Co: 0 to 0.5%, with the balance being Fe and impurities. In addition, when the content of Mo in the chemical composition is defined as [Mo amount] (mass percent), and the content of Mo in precipitate at an R/2 position in a cross section is defined as [total Mo amount in precipitate at R/2 position] (mass percent), [Mo amount] - 4 × [total Mo amount in precipitate at R/2 position] is 1.30 or more. In addition, when the content of Mo in precipitate at a center position in the cross section is defined as [total Mo amount in precipitate at center position], [total Mo amount in precipitate at center position] - [total Mo amount in precipitate at R/2 position] is 0.03 or less.

In the round steel bar disclosed in Patent Literature 1, the homogeneity of the microstructure at the center position and the R/2 position of the cross section is secured while also securing the amount of dissolved Mo in the base metal. By this means, excellent SSC resistance and excellent SCC resistance are obtained.

CITATION LIST

PATENT LITERATURE

Patent Literature 1: International Application Publication No. WO2017/200083

## SUMMARY OF INVENTION

### TECHNICAL PROBLEM

In this connection, due to the deepening of oil wells in recent years, there is a demand for the strength of downhole tools to be increased, similarly to oil country tubular goods. Recently, not only round steel bars of 110 ksi grade (yield strength is 110 to less than 125 ksi, that is, 758 to less than 862 MPa) are required, but there is also a demand for round steel bars having a yield strength of 125 ksi (862 MPa) or more. Furthermore, due to the deepening of oil wells, the environments in which some downhole tools are used are high-pressure and high-temperature environments. Therefore, in some cases a round steel bar to be utilized as a starting material for a downhole tool is required to have a high strength of 125 ksi or more and excellent SSC resistance, and to also have excellent SCC resistance in a high temperature environment. Here, the phrase "high temperature environment" refers to an environment in which the temperature is more than 150°C, and for example an environment with a temperature of 175°C is assumed. In particular, as described above, in a round steel bar to be utilized as a starting material for a downhole tool, in some cases the portion at the center position of the cross section perpendicular to the axial direction is utilized as a downhole tool portion. Therefore, such round steel bars are required to have the aforementioned excellent SSC resistance and excellent SCC resistance in an environment of 175°C even at the center position of the cross section perpendicular to the axial direction.

An objective of the present disclosure is to provide a martensitic stainless steel round bar that has high strength, has excellent SSC resistance, and has excellent SCC resistance in an environment of 175°C.

### SOLUTION TO PROBLEM

In a martensitic stainless steel round bar according to the present disclosure,

a chemical composition consists of, in mass%,
C: 0.030% or less,
Si: 1.00% or less,
Mn: 1.00% or less,
P: 0.030% or less,
S: 0.0100% or less,
Cr: 10.00 to 14.00%,
Ni: 5.00 to 7.50%,
Mo: 1.50 to 4.00%,
Cu: 1.00 to 3.50%,
W: 0.01 to 2.00%,
Co: 0.010 to 0.500%,
Ti: 0.050 to 0.300%,
V: 0.01 to 0.10%,
Ca: 0.0005 to 0.0100%,
Al: 0.001 to 0.100%,
N: 0.0500% or less,
O: 0.050% or less,
Nb: 0 to 0.05%,
Sn: 0 to 0.010%,
As: 0 to 0.010%,
Sb: 0 to 0.010%,
B: 0 to 0.0050%,
Mg: 0 to 0.0100%,
rare earth metal: 0 to 0.010%, and
the balance: Fe and impurities;
wherein:

a yield strength is 862 MPa or more; and
when, at a center position of a cross section perpendicular to an axial direction of the martensitic stainless steel round bar,
a dissolved Mo concentration in percent by mass is defined as [Mo]c,
a dissolved W concentration in percent by mass is defined as [W]c,
an Mo concentration in percent by mass in a residue obtained by constant-current electrolysis is defined as [Mo]$_R$, and

a W concentration in percent by mass in the residue is defined as [W]$_R$,

Formula (1) and Formula (2) are satisfied.

$$F1 = [Mo]_C + 0.5[W]_C \geq 2.45 \quad (1)$$

$$F2 = F1/([Mo]_R + [W]_R) \geq 13.0 \quad (2)$$

ADVANTAGEOUS EFFECTS OF INVENTION

The martensitic stainless steel round bar according to the present disclosure has a high yield strength of 125 ksi (862 MPa) or more, and has excellent SSC resistance even though the yield strength is 125 ksi or more, and also has excellent SCC resistance in an environment of 175°C.

BRIEF DESCRIPTION OF DRAWINGS

[FIG. 1] FIG. 1 is a TTT diagram (time-temperature-transformation diagram) of Laves phase according to the content of Mo and the content of W in a martensitic stainless steel round bar.

[FIG. 2] FIG. 2 is a diagram illustrating the relation between F1 (= [Mo]c + 0.5[W]c) and F2 (= F1/([Mo]$_R$ + [W]$_R$) in martensitic stainless steel round bars in which the content of each element in the chemical composition is within the range described above, and the SSC resistance.

DESCRIPTION OF EMBODIMENT

The present inventors conducted studies from the viewpoint of the chemical composition with respect to a martensitic stainless steel round bar which has a yield strength of 125 ksi (862 MPa) or more, which has excellent SSC resistance even though the yield strength is 125 ksi or more, and which also has excellent SCC resistance in an environment of 175°C.

First, the present inventors considered that in a martensitic stainless steel round bar containing Cr in an amount of 10.00 to 14.00%, it is effective to contain Co to obtain a yield strength of 125 ksi (862 MPa) or more. Therefore, as the result of investigations conducted by the present inventors, the present inventors considered that if the chemical composition consists of, in mass%, C: 0.030% or less, Si: 1.00% or less, Mn: 1.00% or less, P: 0.030% or less, S: 0.0100% or less, Cr: 10.00 to 14.00%, Ni: 5.00 to 7.50%, Mo: 1.50 to 4.00%, Cu: 1.00 to 3.50%, Co: 0.010 to 0.500%, Ti: 0.050 to 0.300%, V: 0.01 to 0.10%, Ca: 0.0005 to 0.0100%, Al: 0.001 to 0.100%, N: 0.0500% or less, O: 0.050% or less, Nb: 0 to 0.05%, Sn: 0 to 0.010%, As: 0 to 0.010%, Sb: 0 to 0.010%, B: 0 to 0.0050%, Mg: 0 to 0.0100%, rare earth metal: 0 to 0.010%, and the balance: Fe and impurities, excellent SSC resistance, and also excellent SCC resistance in an environment of 175°C can be obtained while having a yield strength of 125 ksi (862 MPa) or more.

However, in martensitic stainless steel round bars having the chemical composition described above, in some cases the SSC resistance was low because the yield strength was a high strength of 125 ksi (862 MPa) or more. Further, in some cases stress corrosion cracking was confirmed in an SCC resistance evaluation test in an environment of 175°C. Therefore, the present inventors conducted further studies regarding means for obtaining excellent SSC resistance and also obtaining excellent SCC resistance in an environment of 175°C while having a yield strength of 125 ksi (862 MPa) or more.

As a result of such studies, the present inventors considered that if the aforementioned chemical composition also contains W in lieu of a part of Fe, excellent SSC resistance as well as excellent SCC resistance in an environment of 175°C can be obtained while having a yield strength of 125 ksi (862 MPa) or more.

As a result of further studies, the present inventors considered that if a martensitic stainless steel round bar has a chemical composition consisting of, in mass%, C: 0.030% or less, Si: 1.00% or less, Mn: 1.00% or less, P: 0.030% or less, S: 0.0100% or less, Cr: 10.00 to 14.00%, Ni: 5.00 to 7.50%, Mo: 1.50 to 4.00%, Cu: 1.00 to 3.50%, W: 0.01 to 2.00%, Co: 0.010 to 0.500%, Ti: 0.050 to 0.300%, V: 0.01 to 0.10%, Ca: 0.0005 to 0.0100%, Al: 0.001 to 0.100%, N: 0.0500% or less, O: 0.050% or less, Nb: 0 to 0.05%, Sn: 0 to 0.010%, As: 0 to 0.010%, Sb: 0 to 0.010%, B: 0 to 0.0050%, Mg: 0 to 0.0100%, rare earth metal: 0 to 0.010%, and the balance: Fe and impurities, a yield strength of 125 ksi (862 MPa) or more, excellent SSC resistance, and excellent SCC resistance in an environment of 175°C can be obtained.

When martensitic stainless steel round bars had the chemical composition described above, a yield strength of 125 ksi (862 MPa) or more was obtained, and in an SCC resistance evaluation test in an environment of 175°C, stress corrosion cracking at a center position of the cross section perpendicular to the axial direction was not confirmed, and excellent SCC resistance in an environment of 175°C was obtained. However, there were still some cases where the SSC resistance was low at the center position of the cross section perpendicular to the axial direction.

Therefore, the present inventors conducted additional studies regarding means for improving the SSC resistance in a martensitic stainless steel round bar having the chemical composition described above.

Here, the present inventors focused their attention on the dissolved Mo concentration and the dissolved W concentration at a center position of the cross section perpendicular to the axial direction. In the present description, a center position of the cross section perpendicular to the axial direction of a round steel bar is also referred to as a "cross-section center position". In the chemical composition described above, dissolved Mo and dissolved W which are dissolved in the base metal strongly contribute to improving SSC resistance. The present inventors considered that the total amount of the dissolved Mo concentration and the dissolved W concentration at a cross-section center position of a round steel bar contributes to SSC resistance. Therefore, the present inventors carried out further studies. As a result, it was found that the degree to which the dissolved W concentration contributes to SSC resistance is about 0.5 times the contribution of the dissolved Mo concentration.

Based on the above finding, the present inventors conducted further investigations and studies regarding the relation between the dissolved Mo concentration and dissolved W concentration at a cross-section center position of a round steel bar, and the SSC resistance. As a result, the following matter was revealed. At a cross-section center position of a martensitic stainless steel round bar in which the content of each element in the chemical composition is within the range described above, the dissolved Mo concentration in percent by mass will be defined as $[Mo]_c$, and the dissolved W concentration in percent by mass will be defined as $[W]_c$. In this case, the SSC resistance is increased by satisfying the following Formula (1).

$$F1 = [Mo]_c + 0.5[W]_c \geq 2.45 \qquad (1)$$

However, there were still some cases where even when the content of each element in the chemical composition of a round steel bar was within the range described above and the dissolved Mo concentration and dissolved W concentration at the cross-section center position of the round steel bar satisfied Formula (1), although a yield strength of 125 ksi (862 MPa) or more and excellent SCC resistance in an environment of 175°C were obtained, excellent SSC resistance was not obtained at the cross-section center position of the round steel bar. Therefore, the present inventors conducted further investigations to clarify the reason why this happened. As a result, the present inventors obtained the following novel finding.

Dissolved W increases SSC resistance. However, in the case of the aforementioned chemical composition containing Mo and W, because the chemical composition contains W, formation of Laves phase is also promoted. Hereunder, this point is explained.

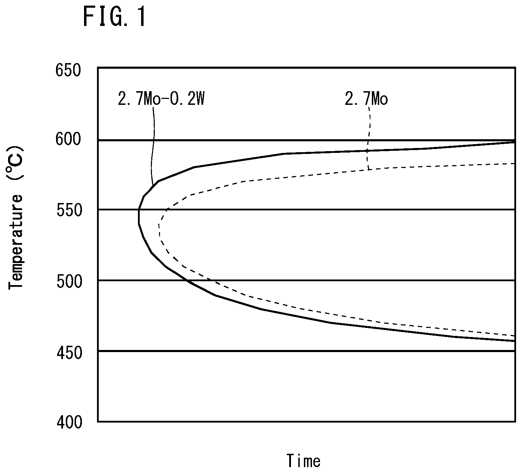

FIG. 1 is a TTT diagram (time-temperature-transformation diagram) of Laves phase depending on the content of Mo and content of W in a martensitic stainless steel round bar. The dashed line in FIG. 1 is a TTT curve representing the start of precipitation of Laves phase in a martensitic stainless steel round bar (described as "2.7Mo" in FIG. 1) which did not contain W and in which the content of Mo was 2.7% and the contents of the other elements were within the range described above. The solid line in FIG. 1 is a TTT curve representing the start of precipitation of Laves phase in a martensitic stainless steel round bar (described as "2.7Mo-0.2W" in FIG. 1) in which the contents of elements other than W and Fe were the same as in the round steel bar represented by the dashed line and which contained W in an amount of 0.2% in lieu of a part of Fe.

Referring to FIG. 1, in comparison to the martensitic stainless steel round bar which did not contain W (2.7Mo), in the case of the martensitic stainless steel round bar containing W (2.7Mo-0.2W), the TTT curve representing the start of precipitation of Laves phase is shifted markedly to the shorter time side. That is, in a martensitic stainless steel round bar containing W, Laves phase is liable to form in a shorter time compared to a martensitic stainless steel round bar which does not contain W.

Therefore, in the case of a martensitic stainless steel round bar containing W, even if the dissolved Mo concentration and the dissolved W concentration are sufficiently secured at the cross-section center position, it is possible that a case will arise in which a large number of Laves phases will form at the cross-section center position. In such case, an action that improves SSC resistance which is attributable to the dissolved Mo and dissolved W will be cancelled out by an action that decreases SSC resistance that is due to the formation of Laves phases, and the SSC resistance will, on the contrary, decrease.

Based on the above finding, the present inventors considered that in the case of a martensitic stainless steel round bar containing W, SSC resistance is strongly influenced by not only the dissolved Mo concentration and the dissolved W concentration at the cross-section center position, but also by the amount of Laves phase formed at the cross-section center position. Further, the present inventors considered that if an action which improves SSC resistance that is attributable to the dissolved Mo concentration and dissolved W concentration is stronger than an action which decreases SSC resistance that is attributable to the amount of Laves phase that is formed, excellent SSC resistance will be obtained.

Here, the Laves phase is an intermetallic compound that contains Cr or Fe, and Mo and W. Further, in residue obtained by subjecting a test specimen including the cross-section center position of a round steel bar to constant-current electrolysis, the Mo concentration in the residue and the W concentration in the residue correspond to the formed amount of Laves phase.

Based on the above findings, the present inventors carried out further studies regarding means for improving the SSC resistance at a cross-section center position of a martensitic stainless steel round bar containing W. As a result, the present inventors found that when, at a center position of the cross section perpendicular to the axial direction, an Mo concentration in percent by mass in a residue obtained by constant-current electrolysis is defined as $[Mo]_R$, and a W concentration in percent by mass in the residue is defined as $[W]_R$, by satisfying not only the aforementioned Formula (1) but also satisfying the following Formula (2), the SSC resistance is increased.

$$F2 = F1/([Mo]_R + [W]_R) \geq 13.0 \quad (2)$$

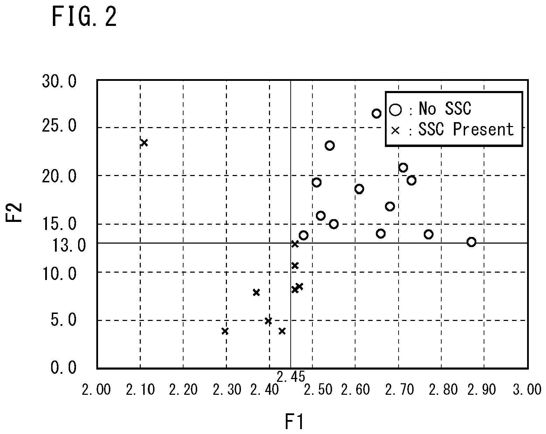

FIG. 2 is a diagram illustrating the relation between F1 and F2 in martensitic stainless steel round bars in which the content of each element in the chemical composition was within the range described above, and the SSC resistance. In FIG. 2, the "O" mark indicates a martensitic stainless steel round bar as evaluated as being excellent in SSC resistance in an SSC resistance evaluation test that is described later. In FIG. 2, the "×" mark indicates a martensitic stainless steel round bar as evaluated as having low SSC resistance in the SSC resistance evaluation test that is described later.

Referring to FIG. 2, when the content of each element in a chemical composition containing W is within the range described above and, in addition, F1 and F2 satisfy Formula (1) and Formula (2), a martensitic stainless steel round bar that has a yield strength of 125 ksi (862 MPa) or more, has excellent SSC resistance, and has excellent SCC resistance in an environment of 175°C is obtained.

The martensitic stainless steel round bar according to the present embodiment was completed based on the technical idea described above, and is as follows.

[1] A martensitic stainless steel round bar that has a chemical composition consisting of, in mass%,

C: 0.030% or less,
Si: 1.00% or less,
Mn: 1.00% or less,
P: 0.030% or less,
S: 0.0100% or less,
Cr: 10.00 to 14.00%,
Ni: 5.00 to 7.50%,
Mo: 1.50 to 4.00%,
Cu: 1.00 to 3.50%,
W: 0.01 to 2.00%,
Co: 0.010 to 0.500%,
Ti: 0.050 to 0.300%,
V: 0.01 to 0.10%,
Ca: 0.0005 to 0.0100%,
Al: 0.001 to 0.100%,
N: 0.0500% or less,
O: 0.050% or less,
Nb: 0 to 0.05%,
Sn: 0 to 0.010%,
As: 0 to 0.010%,
Sb: 0 to 0.010%,
B: 0 to 0.0050%,
Mg: 0 to 0.0100%,
rare earth metal: 0 to 0.010%, and
the balance: Fe and impurities,

wherein:

a yield strength is 862 MPa or more; and
when, at a center position of a cross section perpendicular to an axial direction of the martensitic stainless steel round bar,
a dissolved Mo concentration in percent by mass is defined as $[Mo]c$,
a dissolved W concentration in percent by mass is defined as $[W]c$,
an Mo concentration in percent by mass in a residue obtained by constant-current electrolysis is defined as $[Mo]_R$, and
a W concentration in percent by mass in the residue is defined as $[W]_R$,
Formula (1) and Formula (2) are satisfied.

$$F1 = [Mo]_C + 0.5[W]_C \geq 2.45 \quad (1)$$

$$F2 = F1/([Mo]_R + [W]_R) \geq 13.0 \quad (2)$$

[2] The martensitic stainless steel round bar according to [1], wherein the chemical composition contains one or more elements selected from a group consisting of:

Nb: 0.01 to 0.05%,
Sn: 0.001 to 0.010%,
As: 0.001 to 0.010%,
Sb: 0.001 to 0.010%,
B: 0.0001 to 0.0050%,
Mg: 0.0001 to 0.0100%, and
rare earth metal: 0.001 to 0.010%.

The martensitic stainless steel round bar of the present embodiment is described in detail hereunder. The symbol "%" in relation to an element means "mass percent" unless otherwise noted.

[Characteristics of martensitic stainless steel round bar of present embodiment]

The martensitic stainless steel round bar of the present embodiment has the following Characteristics 1 to 4.

(Characteristic 1)
The chemical composition consists of, in mass%, C: 0.030% or less, Si: 1.00% or less, Mn: 1.00% or less, P: 0.030% or less, S: 0.0100% or less, Cr: 10.00 to 14.00%, Ni: 5.00 to 7.50%, Mo: 1.50 to 4.00%, Cu: 1.00 to 3.50%, W: 0.01 to 2.00%, Co: 0.010 to 0.500%, Ti: 0.050 to 0.300%, V: 0.01 to 0.10%, Ca: 0.0005 to 0.0100%, Al: 0.001 to 0.100%, N: 0.0500% or less, O: 0.050% or less, Nb: 0 to 0.05%, Sn: 0 to 0.010%, As: 0 to 0.010%, Sb: 0 to 0.010%, B: 0 to 0.0050%, Mg: 0 to 0.0100%, rare earth metal: 0 to 0.010%, and the balance: Fe and impurities.
(Characteristic 2)
The yield strength is 862 MPa (125 ksi) or more.
(Characteristic 3)
At the center position of a cross section perpendicular to the axial direction of the round steel bar, F1 (= $[Mo]c$ + 0.5$[W]c$) is 2.45 or more.
(Characteristic 4)
At the center position of a cross section perpendicular to the axial direction of the round steel bar, F2 (= F1/($[Mo]_R$ + $[W]_R$)) is 13.0 or more.
Characteristic 1 to Characteristic 4 are described hereunder.

[(Characteristic 1) Regarding chemical composition]

The chemical composition of the martensitic stainless steel round bar of the present embodiment contains the following elements.

C: 0.030% or less

Carbon (C) is unavoidably contained. That is, the content of C is more than 0%.

C increases the hardenability of the steel material and thereby increases the strength of the steel material. However, if the content of C is more than 0.030%, C will combine with Cr to form Cr carbides. In such case, even if the contents of other elements are within the range of the present embodiment, the SSC resistance of the steel material will be liable to decrease.

Therefore, the content of C is to be 0.030% or less.

A preferable lower limit of the content of C is 0.001%, more preferably is 0.003%, and further preferably is 0.005%.

A preferable upper limit of the content of C is 0.025%, more preferably is 0.020%, and further preferably is 0.015%.

Si: 1.00% or less

Silicon (Si) is unavoidably contained. That is, the content of Si is more than 0%.

Si deoxidizes the steel. However, if the content of Si is more than 1.00%, the hot workability of the steel material will decrease even if the contents of other elements are within the range of the present embodiment.

Therefore, the content of Si is to be 1.00% or less.

A preferable lower limit of the content of Si is 0.01%, more preferably is 0.05%, further preferably is 0.10%, and further preferably is 0.15%.

A preferable upper limit of the content of Si is 0.90%, more preferably is 0.80%, further preferably is 0.70%, further preferably is 0.50%, further preferably is 0.45%, further preferably is 0.40%, and further preferably is 0.30%.

Mn: 1.00% or less

Manganese (Mn) is unavoidably contained. That is, the content of Mn is more than 0%.

Mn increases the hardenability of the steel material and thereby increases the strength of the steel material. However, if the content of Mn is more than 1.00%, even if the contents of other elements are within the range of the present embodiment, Mn will form coarse inclusions, which will reduce the toughness of the steel material.

Therefore, the content of Mn is to be 1.00% or less.

A preferable lower limit of the content of Mn is 0.01%, more preferably is 0.05%, further preferably is 0.10%, further preferably is 0.20%, and further preferably is 0.30%.

A preferable upper limit of the content of Mn is 0.90%, more preferably is 0.80%, further preferably is 0.70%, further preferably is 0.60%, further preferably is 0.50%, and further preferably is 0.45%.

P: 0.030% or less

Phosphorus (P) is an impurity that is unavoidably contained. That is, the content of P is more than 0%.

If the content of P is more than 0.030%, even if the contents of other elements are within the range of the present embodiment, P will segregate to crystal grain boundaries, which will markedly decrease the toughness of the steel material.

Therefore, the content of P is to be 0.030% or less.

The content of P is preferably as low as possible. However, excessively reducing the content of P will significantly increase the production cost. Therefore, when taking industrial production into consideration, a preferable lower limit of the content of P is 0.001%, more preferably is 0.002%, and further preferably is 0.005%.

A preferable upper limit of the content of P is 0.025%, and more preferably is 0.020%.

S: 0.0100% or less

Sulfur (S) is an impurity that is unavoidably contained. That is, the content of S is more than 0%.

If the content of S is more than 0.0100%, S will excessively segregate to crystal grain boundaries, and an excessively large amount of MnS will be formed. In such case, the toughness and hot workability of the steel material will markedly decrease even if the contents of other elements are within the range of the present embodiment.

Therefore, the content of S is to be 0.0100% or less.

The content of S is preferably as low as possible. However, excessively reducing the content of S will significantly increase the production cost. Therefore, when taking industrial production into consideration, a preferable lower limit of the content of S is 0.0001%, more preferably is 0.0002%, and further preferably is 0.0004%.

A preferable upper limit of the content of S is 0.0080%, more preferably is 0.0060%, further preferably is 0.0040%, further preferably is 0.0030%, and further preferably is 0.0020%.

Cr: 10.00 to 14.00%

Chromium (Cr) forms a passivation film on the surface of the steel material in a sour environment, and thereby improves the SSC resistance of the steel material. If the content of Cr is less than 10.00%, the aforementioned effect will not be sufficiently obtained even if the contents of other elements are within the range of the present embodiment.

On the other hand, if the content of Cr is more than 14.00%, Cr carbides, intermetallic compounds containing Cr, and Cr oxides will excessively form. In such case, the SSC resistance of the steel material will decrease even if the contents of other elements are within the range of the present embodiment.

Therefore, the content of Cr is to be 10.00 to 14.00%.

A preferable lower limit of the content of Cr is 10.50%, more preferably is 11.00%, further preferably is 11.40%, and further preferably is 11.70%.

A preferable upper limit of the content of Cr is 13.70%, more preferably is 13.60%, further preferably is 13.50%, further preferably is 13.40%, and further preferably is 13.30%.

Ni: 5.00 to 7.50%

Nickel (Ni) forms sulfides on a passivation film in a sour environment. The Ni sulfides inhibit chloride ions (Cl⁻) and hydrogen sulfide ions (HS⁻) from coming into contact with the passivation film. Consequently, it is difficult for the passivation film to be broken by chloride ions and hydrogen sulfide ions. As a result, Ni increases the SSC resistance of the steel material in a sour environment. Ni is also an austenite forming element. Therefore, Ni martensitizes the microstructure of the steel material after quenching. If the content of Ni is less than 5.00%, the aforementioned effects will not be sufficiently obtained even if the contents of other elements are within the range of the present embodiment.

On the other hand, if the content of Ni is more than 7.50%, even if the contents of other elements are within the range of the present embodiment, the diffusion coefficient of hydrogen in the steel material will excessively decrease. In such case, particularly in a steel material having a yield strength of 125 ksi grade or more (862 MPa or more), the SSC resistance will, on the contrary, decrease.

Therefore, the content of Ni is to be 5.00 to 7.50%.

A preferable lower limit of the content of Ni is 5.10%, more preferably is 5.20%, and further preferably is 5.30%.

A preferable upper limit of the content of Ni is 7.20%, more preferably is 7.00%, further preferably is 6.80%, further preferably is 6.60%, and further preferably is 6.50%.

Mo: 1.50 to 4.00%

Molybdenum (Mo) forms sulfides on a passivation film in a sour environment. The Mo sulfides inhibit chloride ions (Cl⁻) and hydrogen sulfide ions (HS⁻) from coming into contact with the passivation film. Consequently, it is difficult for the passivation film to be broken by chloride ions and hydrogen sulfide ions. As a result, Mo increases the SSC resistance of the steel material in a sour environment. If the content of Mo is less than 1.50%, this advantageous effect will not be sufficiently obtained even if the contents of other elements are within the range of the present embodiment.

On the other hand, if the content of Mo is more than 4.00%, even if the contents of other elements are within the range of the present embodiment, it will be difficult for austenite to stabilize. As a result, it will be difficult for a microstructure mainly composed of martensite to be stably obtained.

Therefore, the content of Mo is to be 1.50 to 4.00%.

A preferable lower limit of the content of Mo is 1.60%, more preferably is 1.70%, and further preferably is 1.80%.

A preferable upper limit of the content of Mo is 3.80%, more preferably is 3.60%, further preferably is 3.40%, further preferably is 3.20%, and further preferably is 3.10%.

Cu: 1.00 to 3.50%

Copper (Cu) increases the SCC resistance of the steel material in an environment of 175°C. If the content of Cu is less than 1.00%, the aforementioned effect will not be sufficiently obtained.

On the other hand, if the content of Cu is more than 3.50%, the hot workability of the steel material will decrease even if the contents of other elements are within the range of the present embodiment.

Therefore, the content of Cu is to be 1.00 to 3.50%.

A preferable lower limit of the content of Cu is 1.20%, more preferably is 1.40%, further preferably is 1.60%, and further preferably is 1.80%.

A preferable upper limit of the content of Cu is 3.30%, more preferably is 3.00%, further preferably is 2.70%, and further preferably is 2.40%.

W: 0.01 to 2.00%

Tungsten (W) stabilizes a passivation film in a sour environment. Therefore, it is difficult for the passivation film to be broken by chloride ions and hydrogen sulfide ions. As a result, the SSC resistance of the steel material increases. If the content of W is less than 0.01%, the aforementioned effect will not be sufficiently obtained even if the contents of other elements are within the range of the present embodiment.

On the other hand, if the content of W is more than 2.00%, W will combine with C, and coarse W carbides will be formed. In such case, the toughness of the steel material will decrease even if the contents of other elements are within the range of the present embodiment.

Therefore, the content of W is to be 0.01 to 2.00%.

A preferable lower limit of the content of W is 0.05%, more preferably is 0.10%, further preferably is 0.15%, and further preferably is 0.20%.

A preferable upper limit of the content of W is 1.90%, more preferably is 1.80%, further preferably is 1.70%, and further preferably is 1.60%.

Co: 0.010 to 0.500%

Cobalt (Co) forms sulfides on a passivation film in a sour environment. The Co sulfides inhibit chloride ions ($Cl^-$) and/or hydrogen sulfide ions ($HS^-$) from coming into contact with the passivation film. Consequently, it is difficult for the passivation film to be broken by chloride ions or hydrogen sulfide ions. As a result, Co increases the SSC resistance of the steel material. Co also suppresses the formation of retained austenite, and suppresses the occurrence of variations in the strength of the steel material. If the content of Co is less than 0.010%, the aforementioned effects will not be sufficiently obtained even if the contents of other elements are within the range of the present embodiment.

On the other hand, if the content of Co is more than 0.500%, the toughness of the steel material will decrease even if the contents of other elements are within the range of the present embodiment.

Therefore, the content of Co is to be 0.010 to 0.500%.

A preferable lower limit of the content of Co is 0.030%, more preferably is 0.060%, further preferably is 0.080%, further preferably is 0.100%, and further preferably is 0.110%.

A preferable upper limit of the content of Co is 0.450%, more preferably is 0.400%, further preferably is 0.350%, further preferably is 0.300%, and further preferably is 0.250%.

Ti: 0.050 to 0.300%

Titanium (Ti) combines with C or N to form Ti precipitates that are carbides or nitrides. The Ti precipitates suppress coarsening of grains by the pinning effect. As a result, the strength of the steel material increases. In addition, excessive formation of V precipitates which are carbides, nitrides, or carbo-nitrides is suppressed by formation of the Ti precipitates. Therefore, an excessive increase in strength is suppressed. As a result, the SSC resistance of the steel material increases. If the content of Ti is less than 0.050%, the aforementioned effects will not be sufficiently obtained even if the contents of other elements are within the range of the present embodiment.

On the other hand, if the content of Ti is more than 0.300%, Ti precipitates will excessively form even if the contents of other elements are within the range of the present embodiment. In such case, the toughness of the steel material will decrease.

Therefore, the content of Ti is to be 0.050 to 0.300%.

A preferable lower limit of the content of Ti is 0.060%, more preferably is 0.070%, further preferably is 0.080%, and further preferably is 0.090%.

A preferable upper limit of the content of Ti is 0.270%, more preferably is 0.240%, further preferably is 0.210%, further preferably is 0.180%, further preferably is 0.150%, and further preferably is 0.120%.

V: 0.01 to 0.10%

Vanadium (V) forms V precipitates that are carbides, nitrides, or carbo-nitrides in the steel material. The V precipitates increase the strength of the steel material. If the content of V is less than 0.01%, the aforementioned effect will not be sufficiently obtained even if the contents of other elements are within the range of the present embodiment.

On the other hand, if the content of V is more than 0.10%, V precipitates will excessively form. Consequently, the strength of the steel material will become excessively high. As a result, even if the contents of other elements are within the range of the present embodiment, the SSC resistance of the steel material will decrease.

Therefore, the content of V is to be 0.01 to 0.10%.

A preferable lower limit of the content of V is 0.02%, more preferably is 0.03%, and further preferably is 0.04%.

A preferable upper limit of the content of V is 0.09%, more preferably is 0.08%, and further preferably is 0.07%.

Ca: 0.0005 to 0.0100%

Calcium (Ca) spheroidizes and/or refines inclusions. Therefore, the hot workability of the steel material increases. If the content of Ca is less than 0.0005%, the aforementioned effect will not be sufficiently obtained even if the contents of other elements are within the range of the present embodiment.

On the other hand, if the content of Ca is more than 0.0100%, coarse oxides will form. In such case, the toughness of the steel material will decrease even if the contents of other elements are within the range of the present embodiment.

Therefore, the content of Ca is to be 0.0005 to 0.0100%.

A preferable lower limit of the content of Ca is 0.0008%, more preferably is 0.0010%, further preferably is 0.0015%, and further preferably is 0.0020%.

A preferable upper limit of the content of Ca is 0.0080%, more preferably is 0.0060%, further preferably is 0.0050%, further preferably is 0.0040%, and further preferably is 0.0035%.

Al: 0.001 to 0.100%

Aluminum (Al) deoxidizes the steel. If the content of Al is less than 0.001%, the aforementioned effect will not be sufficiently obtained even if the contents of other elements are within the range of the present embodiment.

On the other hand, if the content of Al is more than 0.100%, coarse Al oxides will form even if the contents of other elements are within the range of the present embodiment. In such case, the toughness of the steel material will decrease.

Therefore, the content of Al is to be 0.001 to 0.100%.

A preferable lower limit of the content of Al is 0.003%, more preferably is 0.005%, and further preferably is 0.010%.

A preferable upper limit of the content of Al is 0.080%, more preferably is 0.060%, further preferably is 0.050%, and further preferably is 0.040%.

In the present description, the term "content of Al" means the content of sol. Al (acid-soluble Al).

N: 0.0500% or less

Nitrogen (N) is an impurity that is unavoidably contained. That is, the content of N is more than 0%.

If the content of N is more than 0.0500%, coarse TiN will form. In such case, the SSC resistance of the steel material will decrease even if the contents of other elements are within the range of the present embodiment.

Therefore, the content of N is to be 0.0500% or less.

The content of N is preferably as low as possible. However, excessively reducing the content of N will significantly raise the production cost. Therefore, when taking industrial production into consideration, a preferable lower limit of the content of N is 0.0001%, more preferably is 0.0005%, further preferably is 0.0010%, further preferably is 0.0020%, and further preferably is 0.0030%.

A preferable upper limit of the content of N is 0.0400%, more preferably is 0.0300%, further preferably is 0.0250%, further preferably is 0.0200%, and further preferably is 0.0150%.

O: 0.050% or less

Oxygen (O) is an impurity that is unavoidably contained. That is, the content of O is more than 0%.

If the content of O is more than 0.050%, coarse oxides will form. In such case, the SSC resistance of the round steel bar will decrease even if the contents of other elements are within the range of the present embodiment.

Therefore, the content of O is 0.050% or less.

The content of O is preferably as low as possible. However, excessively reducing the content of O will significantly raise the production cost. Therefore, when taking industrial production into consideration, a preferable lower limit of the content of O is 0.001%, and more preferably is 0.002%.

A preferable upper limit of the content of O is 0.040%, more preferably is 0.030%, further preferably is 0.025%, further preferably is 0.020%, and further preferably is 0.010%.

The balance of the chemical composition of the martensitic stainless steel round bar of the present embodiment is Fe and impurities. Here, the term "impurities" refers to substances which, during industrial production of the round steel bar, are mixed in from ore or scrap that is used as the raw material, or from the production environment or the like, and which are not intentionally contained but are allowed within a range that does not adversely influence the advantageous effects of the martensitic stainless steel round bar of the present embodiment.

[Regarding optional elements]

The chemical composition of the martensitic stainless steel round bar of the present embodiment may further contain, in lieu of a part of Fe, one or more optional elements selected from the following group:

Nb: 0 to 0.05%,
Sn: 0 to 0.010%,
As: 0 to 0.010%,
Sb: 0 to 0.010%,
B: 0 to 0.0050%,
Mg: 0 to 0.0100%, and
rare earth metal: 0 to 0.010%.

These optional elements are described hereunder.

[First group: Nb, Sn, As, and Sb]

The chemical composition of the martensitic stainless steel round bar of the present embodiment may further contain one or more elements selected from the group consisting of Nb, Sn, As, and Sb in lieu of a part of Fe. These elements are optional elements, and each of these elements increases the SSC resistance of the steel material.

Nb: 0 to 0.05%

Niobium (Nb) is an optional element, and does not have to be contained. That is, the content of Nb may be 0%.
When contained, that is, when the content of Nb is more than 0%, Nb forms Nb precipitates that are carbides, nitrides, or carbo-nitrides. The Nb precipitates refine the substructure of the steel material by the pinning effect. As a result, the SSC resistance of the steel material increases. If even a small amount of Nb is contained, the aforementioned effect will be obtained to a certain extent.
However, if the content of Nb is more than 0.05%, Nb precipitates will excessively form. In such case, the SSC resistance of the steel material will decrease even if the contents of other elements are within the range of the present embodiment.
Therefore, the content of Nb is to be 0 to 0.05%. In the case of containing Nb, the content of Nb is to be 0.05% or less.
A preferable lower limit of the content of Nb is 0.01%.
A preferable upper limit of the content of Nb is 0.04%, and more preferably is 0.03%.

Sn: 0 to 0.010%

Tin (Sn) is an optional element, and does not have to be contained. That is, the content of Sn may be 0%.
When contained, that is, when the content of Sn is more than 0%, Sn increases the SSC resistance of the steel material. If the steel material has even a small content of Sn, the aforementioned effect will be obtained to a certain extent.
However, if the content of Sn is more than 0.010%, Sn will segregate to grain boundaries even if the contents of other elements are within the range of the present embodiment. In such case, the SSC resistance of the steel material will decrease.
Therefore, the content of Sn is to be 0 to 0.010%. In the case of containing Sn, the content of Sn is to be 0.010% or less.
A preferable lower limit of the content of Sn is 0.001%, and more preferably is 0.002%.
A preferable upper limit of the content of Sn is 0.009%, more preferably is 0.008%, and further preferably is 0.007%.

As: 0 to 0.010%

Arsenic (As) is an optional element, and does not have to be contained. That is, the content of As may be 0%.
When contained, that is, when the content of As is more than 0%, As increases the SSC resistance of the steel material. If even a small amount of As is contained, the aforementioned effect will be obtained to a certain extent.

However, if the content of As is more than 0.010%, As will segregate to grain boundaries even if the contents of other elements are within the range of the present embodiment. In such case, the SSC resistance of the steel material will decrease.

Therefore, the content of As is to be 0 to 0.010%. In the case of containing As, the content of As is to be 0.010% or less.

A preferable lower limit of the content of As is 0.001%, and more preferably is 0.002%.

A preferable upper limit of the content of As is 0.009%, and more preferably is 0.008%.

Sb: 0 to 0.010%

Antimony (Sb) is an optional element, and does not have to be contained. That is, the content of Sb may be 0%.

When contained, that is, when the content of Sb is more than 0%, Sb increases the SSC resistance of the steel material. If even a small amount of Sb is contained, the aforementioned effect will be obtained to a certain extent.

However, if the content of Sb is more than 0.010%, Sb will segregate to grain boundaries even if the contents of other elements are within the range of the present embodiment. In such case, the SSC resistance of the steel material will decrease.

Therefore, the content of Sb is to be 0 to 0.010%. In the case of containing Sb, the content of Sb is to be 0.010% or less.

A preferable lower limit of the content of Sb is 0.001%, and more preferably is 0.002%.

A preferable upper limit of the content of Sb is 0.009%, and more preferably is 0.008%.

[Second group: B, Mg, and rare earth metal (REM)]

The chemical composition of the martensitic stainless steel round bar of the present embodiment may further contain one or more elements selected from the group consisting of B, Mg, and rare earth metal (REM) in lieu of a part of Fe. These elements are optional elements, and each of these elements increases the hot workability of the steel material.

B: 0 to 0.0050%

Boron (B) is an optional element, and does not have to be contained. That is, the content of B may be 0%.

When contained, that is, when the content of B is more than 0%, B segregates to austenite grain boundaries and thereby strengthens the grain boundaries. As a result, the hot workability of the steel material increases. If even a small amount of B is contained, the aforementioned effect will be obtained to a certain extent.

However, if the content of B is more than 0.0050%, Cr carbo-borides will form even if the contents of other elements are within the range of the present embodiment. In such case, the toughness of the steel material will decrease.

Therefore, the content of B is to be 0 to 0.0050%. In the case of containing B, the content of B is to be 0.0050% or less.

A preferable lower limit of the content of B is 0.0001%, more preferably is 0.0002%, and further preferably is 0.0003%.

A preferable upper limit of the content of B is 0.0040%, more preferably is 0.0030%, further preferably is 0.0020%, further preferably is 0.0010%, further preferably is 0.0008%, and further preferably is 0.0007%.

Mg: 0 to 0.0100%

Magnesium (Mg) is an optional element, and does not have to be contained. That is, the content of Mg may be 0%.

When contained, that is, when the content of Mg is more than 0%, similarly to Ca, Mg spheroidizes and/or refines inclusions. As a result, the hot workability of the steel material increases. If even a small amount of Mg is contained, the aforementioned effect will be obtained to a certain extent.

However, if the content of Mg is more than 0.0100%, coarse oxides will form. In such case, the toughness of the steel material will decrease even if the contents of other elements are within the range of the present embodiment.

Therefore, the content of Mg is to be 0 to 0.0100%. In the case of containing Mg, the content of Mg is to be 0.0100% or less.

A preferable lower limit of the content of Mg is 0.0001%, more preferably is 0.0005%, and further preferably is 0.0010%.

A preferable upper limit of the content of Mg is 0.0080%, more preferably is 0.0060%, further preferably is 0.0040%, and further preferably is 0.0020%.

Rare earth metal (REM): 0 to 0.010%

Rare earth metal (REM) is an optional element, and does not have to be contained. That is, the content of REM may be 0%.

When contained, that is, when the content of REM is more than 0%, similarly to Ca, REM spheroidizes and/or refines inclusions. As a result, the hot workability of the steel material increases. If even a small amount of REM is contained, the aforementioned effect will be obtained to a certain extent.

However, if the content of REM is more than 0.010%, coarse oxides will form. In such case, the toughness of the steel material will decrease even if the contents of other elements are within the range of the present embodiment.

Therefore, the content of REM is to be 0 to 0.010%. In the case of containing REM, the content of REM is to be 0.010% or less.

A preferable lower limit of the content of REM is 0.001%, and more preferably is 0.002%.

A preferable upper limit of the content of REM is 0.008%, more preferably is 0.006%, further preferably is 0.004%, and further preferably is 0.003%.

Note that, in the present description, the term "REM" means one or more elements selected from the group consisting of scandium (Sc) which is the element with atomic number 21, yttrium (Y) which is the element with atomic number 39, and the elements from lanthanum (La) with atomic number 57 to lutetium (Lu) with atomic number 71 that are lanthanoids. Further, in the present description the term "content of REM" refers to the total content of these elements.

[(Characteristic 2) Regarding yield strength]

The yield strength of the martensitic stainless steel round bar of the present embodiment is 125 ksi or more, that is, 862 MPa or more.

[Method for measuring yield strength]

In the present description, the term "yield strength" means the 0.2% offset yield stress (MPa) which is obtained by a tensile test at normal temperature in accordance with ASTM E8/E8M (2013). Specifically, the yield strength is determined by the following method.

A tensile test specimen is taken from an R/2 position of the martensitic stainless steel round bar. The term "R/2 position" means the center position of a radius R in the cross section perpendicular to the axial direction of the martensitic stainless steel round bar. The tensile test specimen is, for example, a round bar tensile test specimen having a parallel portion with a diameter of 6.0 mm, and a gage length of 30.0 mm. The axial direction of the parallel portion of the round bar tensile test specimen is to be parallel to the axial direction of the martensitic stainless steel round bar.

A tensile test is carried out at normal temperature in accordance with ASTM E8/E8M (2013) using the round bar tensile test specimen to determine the 0.2% offset yield stress (MPa). The determined 0.2% offset yield stress is defined as the yield strength (MPa).

A more preferable lower limit of the yield strength is 870 MPa, further preferably is 880 MPa, further preferably is 890 MPa, and further preferably is 900 MPa.

The upper limit of the yield strength of the martensitic stainless steel round bar of the present embodiment is not particularly limited. As long as the content of each element in the chemical composition of the martensitic stainless steel round bar is within the aforementioned range, the upper limit of the yield strength is, for example, 1000 MPa (145 ksi), and preferably is 965 MPa (140 ksi).

[(Characteristic 3 and Characteristic 4) Regarding Formula (1) and Formula (2)]

Concentrations of elements at the center position of a cross section perpendicular to the axial direction of the martensitic stainless steel round bar of the present embodiment are defined as follows.

(A) A dissolved Mo concentration in percent by mass is defined as [Mo]c.
(B) A dissolved W concentration in percent by mass is defined as [W]c.
(C) An Mo concentration in percent by mass in a residue obtained by constant-current electrolysis is defined as [Mo]$_R$.
(D) A W concentration in percent by mass in the residue is defined as [W]$_R$.

In this case, in the round steel bar of the present embodiment, the following Formula (1) and Formula (2) are satisfied.

$$F1 = [Mo]_C + 0.5[W]_C \geq 2.45 \quad (1)$$

$$F2 = F1/([Mo]_R + [W]_R) \geq 13.0 \quad (2)$$

Hereunder, F1 and F2 are described.

[(Characteristic 3) Regarding Formula (1)]

F1 (= [Mo]c + 0.5[W]c) is an index of SSC resistance that is attributable to the dissolved Mo concentration and dissolved W concentration at a cross-section center position of the martensitic stainless steel round bar.

If F1 is less than 2.45, even if a martensitic stainless steel round bar satisfies Characteristic 1 (chemical composition), Characteristic 2 (strength), and Characteristic 4 (Formula (2)), the dissolved Mo concentration and dissolved W concentration in the round steel bar will not be sufficient. In such case, SSC resistance will not be sufficiently obtained at the cross-section center position of the martensitic stainless steel round bar having a yield strength of 125 ksi (862 MPa) or more.

If F1 is 2.45 or more, the dissolved Mo concentration and dissolved W concentration in the round steel bar will be sufficient. Therefore, on the precondition that the round steel bar satisfies Characteristic 1, Characteristic 2, and Characteristic 4, it is possible to obtain both a yield strength of 125 ksi (862 MPa) or more and excellent SSC resistance in the martensitic stainless steel round bar. Therefore, F1 is to be 2.45 or more.

A preferable lower limit of F1 is 2.50, more preferably is 2.52, further preferably is 2.55, and further preferably is 2.60.

The upper limit of F1 is not particularly limited. However, in the case of the round steel bar of the present embodiment, when taking into consideration the upper limit of the content of Mo and the upper limit of the content of W in the chemical composition, the upper limit of F1 is, for example, 5.00, or for example is 4.50, or for example is 4.00.

Note that, the dissolved Mo concentration [Mo]c and the dissolved W concentration [W]c are also influenced by the content of Mo and the content of W in the chemical composition of the martensitic stainless steel round bar. Therefore, preferably, the content of Mo and the content of W in the chemical composition of the martensitic stainless steel round bar satisfy Formula (0).

$$F0 = Mo + 0.5W \geq 2.55 \quad (0)$$

Where, a content in percent by mass of the corresponding element is substituted for each symbol of an element in Formula (0).

If the content of Mo and the content of W in the chemical composition of the martensitic stainless steel round bar satisfy Formula (0), it will be easy for the dissolved Mo concentration [Mo]c and the dissolved W concentration [W]c to satisfy Formula (1).

A preferable lower limit of F0 is 2.60, more preferably is 2.65, further preferably is 2.68, and further preferably is 2.70. Although the upper limit of F0 is not particularly limited, in a case where the martensitic stainless steel round bar satisfies Characteristic 1, the upper limit of F0 is 5.00.

[(Characteristic 4) Regarding Formula (2)]

F2 is an index indicating the relation between an action that improves SSC resistance which is attributable to the dissolved Mo concentration and dissolved W concentration, and an action that decreases SSC resistance that is attributable to the formed amount of Laves phase in the martensitic stainless steel round bar. Even if there is enough dissolved Mo and dissolved W present for F1 to satisfy Formula (1), if the formed amount of Laves phase is large, the SSC resistance will decrease due to the formed amount of Laves phase. That is, the action that improves SSC resistance that is attributable to the dissolved Mo concentration and the dissolved W concentration is cancelled out by the action that decreases the SSC resistance that is attributable to the formed amount of Laves phase. As illustrated in FIG. 1, in a case where W is contained, Laves phases are more easily formed compared to a case where W is not contained. Therefore, in the present embodiment, the relation between the dissolved Mo concentration and dissolved W concentration, and the formed amount of Laves phase is adjusted to an appropriate relation.

The numerator of F2 (= F1/([Mo]_R + [W]_R)) means the degree of improvement in SSC resistance attributable to the dissolved Mo concentration and dissolved W concentration. The denominator of F2 means the degree of decrease in SSC resistance attributable to the formed amount of Laves phase.

If F2 is less than 13.0, the action that decreases the SSC resistance that is attributable to the formed amount of Laves phase will be stronger than the action that improves SSC resistance that is attributable to the dissolved Mo concentration and the dissolved W concentration. Therefore, even if the yield strength of the round steel bar is 125 ksi (862 MPa) or more, the SSC resistance at the cross-section center position will decrease.

If F2 is 13.0 or more, the action that improves SSC resistance that is attributable to the dissolved Mo concentration and the dissolved W concentration will be stronger than the action that decreases the SSC resistance that is attributable to the formed amount of Laves phase. Therefore, it will be possible to obtain both a yield strength of 125 ksi (862 MPa) or more and excellent SSC resistance. Therefore, F2 is to be 13.0 or more.

A preferable lower limit of F2 is 13.2, more preferably is 13.5, further preferably is 13.8, and further preferably is 14.0.

The upper limit of F2 is not particularly limited. However, the upper limit of F2 is, for example, 50.0, and a preferable upper limit is 45.0, and more preferably is 40.0.

[Method for determining $[Mo]c$, $[W]_C$, $[Mo]_R$, and $[W]_R$]

The dissolved Mo concentration $[Mo]c$, the dissolved W concentration $[W]c$, the Mo concentration $[Mo]_R$ in a residue, and the W concentration $[W]_R$ in the residue can be determined by the following method.

A cylindrical test specimen having a diameter of 10 mm and a length of 50 mm that includes the center position of the cross section perpendicular to the axial direction of the martensitic stainless steel round bar is taken from the round steel bar. At such time, the cylindrical test specimen is taken in a manner so that the central axis of the cylindrical test specimen coincides with the central axis of the round steel bar.

Preliminary electrolysis is performed to remove deposits on the surface of the cylindrical test specimen that has been taken. Here, the deposits on the surface of the cylindrical test specimen are scale and impurities or the like on the surface. A 10% AA-based solution is used for the preliminary electrolysis. The 10% AA-based solution is a solution that contains, in volume fraction, 10% acetylacetone, 1% tetramethylammonium chloride, and 89% methanol solution. Using the 10% AA-based solution, electrolysis is performed at normal temperature (20±15°C) and with a current of 1000 mA to a depth of about 50 μm from the surface of the cylindrical test specimen.

The cylindrical test specimen after the preliminary electrolysis is immersed in an alcohol solution. The cylindrical test specimen immersed in the alcohol solution is subjected to ultrasonic cleaning to remove deposits on the surface of the cylindrical test specimen. The mass of the cylindrical test specimen after the ultrasonic cleaning (the cylindrical test specimen before constant-current electrolysis) is measured.

Next the cylindrical test specimen is subjected to constant-current electrolysis. Specifically, a new 10% AA-based solution is prepared. Then, using the new 10% AA-based solution, a region from the surface of the sample to a depth position of approximately 100 μm is electrolyzed at normal temperature while maintaining the current density at 20 mA/cm$^2$.

After the constant-current electrolysis, the test specimen is immersed in an alcohol solution. Thereafter, ultrasonic cleaning is performed to remove deposits on the cylindrical test specimen surface. The mass of the cylindrical test specimen from which deposits were removed after the constant-current electrolysis is measured.

The 10% AA-based solution used in the constant-current electrolysis, and the alcohol solution used in the ultrasonic cleaning thereafter are suction filtered through a filter with a mesh size of 0.2 μm to extract residue.

The extracted residue is subjected to chemical elemental analysis using ICP-AES to obtain the Mo mass in the residue and the W mass in the residue. In addition, the mass of the cylindrical test specimen after the constant-current electrolysis is subtracted from the mass of the cylindrical test specimen before the constant-current electrolysis to determine the mass of the round steel bar subjected to the constant-current electrolysis. The Mo concentration $[Mo]_R$ (mass%) in the residue, and the W concentration $[W]_R$ (mass%) in the residue are determined based on the Mo mass in the residue, the W mass in the residue, and the mass of the round steel bar subjected to the constant-current electrolysis.

The Mo concentration $[Mo]_R$ in the residue is subtracted from the content of Mo in the chemical composition of the martensitic stainless steel round bar to determine the dissolved Mo concentration $[Mo]c$ (mass%) in the martensitic stainless steel round bar. In addition, the W concentration $[W]_R$ in the residue is subtracted from the content of W in the chemical composition of the martensitic stainless steel round bar to determine the dissolved W concentration $[W]c$ (mass %) in the round steel bar.

[Microstructure]

The microstructure of the martensitic stainless steel round bar according to the present embodiment is mainly composed of martensite. In the present description, the term "martensite" includes not only fresh martensite, but also includes tempered martensite. Further, in the present description, the phrase "mainly composed of martensite" means that the volume ratio of martensite is 80.0% or more in the microstructure.

The balance of the microstructure of the martensitic stainless steel round bar is retained austenite. That is, in the martensitic stainless steel round bar of the present embodiment, the volume ratio of retained austenite is 0 to 20.0%. The volume ratio of retained austenite is preferably as low as possible. A preferable lower limit of the volume ratio of martensite in the microstructure of the martensitic stainless steel round bar of the present embodiment is 85.0%, and further preferably is 90.0%. Further preferably, the microstructure of the steel material is composed of a martensite single-phase.

[Method for measuring volume ratio of martensite]

The volume ratio (%) of martensite in the microstructure of the martensitic stainless steel round bar of the present embodiment can be determined by subtracting the volume ratio (%) of retained austenite, which is obtained by the following method, from 100.0%.
The volume ratio of retained austenite can be determined by X-ray diffractometry. Specifically, a test specimen is taken from an R/2 position of the martensitic stainless steel round bar. Although not particularly limited, the size of the test specimen is, for example, 15 mm × 15 mm × 2 mm in thickness. In this case, the thickness direction of the test specimen corresponds to the radial direction of the round steel bar.
Using the obtained test specimen, the X-ray diffraction intensity of each of the (200) plane of $\alpha$ phase, the (211) plane of $\alpha$ phase, the (200) plane of $\gamma$ phase, the (220) plane of $\gamma$ phase, and the (311) plane of $\gamma$ phase is measured to calculate an integrated intensity of each plane. In the measurement of the X-ray diffraction intensity, the target of the X-ray diffraction apparatus is Mo (Mo K$\alpha$ ray), and the output thereof is 50 kV-40 mA.
After calculation, the volume ratio Vy (%) of retained austenite is calculated using Formula (I) for combinations (2 × 3 = 6 pairs) of each $\alpha$ phase plane and each $\gamma$ phase plane. Then, an average value of the volume ratios Vy of retained austenite of the six pairs is defined as the volume ratio (%) of retained austenite.

$$V\gamma = 100/\{1 + (I\alpha \times R\gamma)/(I\gamma \times R\alpha)\}...(I)$$

Where, I$\alpha$ is an integrated intensity of $\alpha$ phase. R$\alpha$ is a crystallographic theoretical calculation value of $\alpha$ phase. Iy is an integrated intensity of $\gamma$ phase. Ry is a crystallographic theoretical calculation value of $\gamma$ phase. Note that, in the present description, R$\alpha$ in the (200) plane of $\alpha$ phase is 15.9, R$\alpha$ in the (211) plane of $\alpha$ phase is 29.2, Ry in the (200) plane of $\gamma$ phase is 35.5, Ry in the (220) plane of $\gamma$ phase is 20.8, and Ry in the (311) plane of $\gamma$ phase is 21.8. Note that the volume ratio of retained austenite is obtained by rounding off to the first decimal place of an obtained numerical value.
Using the volume ratio (%) of retained austenite obtained by the above X-ray diffractometry, the volume ratio (vol. %) of martensite in the microstructure of the martensitic stainless steel round bar is obtained by the following equation.

$$\text{Volume ratio of martensite} = 100.0 - \text{volume ratio (\%) of retained austenite}$$

[Advantageous effect of martensitic stainless steel round bar of present embodiment]

As described above, the martensitic stainless steel round bar of the present embodiment has the following Characteristics 1 to 4.

(Characteristic 1) The content of each element in the chemical composition is within the range of the present embodiment.
(Characteristic 2) The yield strength is 862 MPa (125 ksi) or more.
(Characteristic 3) F1 (= [Mo]c + 0.5[W]c) is 2.45 or more.
(Characteristic 4) F2 (= F1/([Mo]$_R$ + [W]$_R$)) is 13.0 or more.

By having these characteristics, even though the yield strength of the round steel bar of the present embodiment is 125 ksi (862 MPa) or more which is a high yield strength, the round steel bar has excellent SSC resistance, and also has excellent SCC resistance in an environment of 175°C.

[SSC resistance evaluation method]

The SSC resistance of the martensitic stainless steel round bar of the present embodiment can be evaluated by an SSC resistance evaluation test conducted in accordance with NACE TM0177-2016 Method A.
An SSC resistance evaluation test method that is in accordance with NACE TM0177-2016 Method A is as follows. A round bar specimen is taken from the center position in the cross section perpendicular to the axial direction of the martensitic stainless steel round bar. The size of the round bar specimen is not particularly limited. For example, the diameter of the parallel portion of the round bar specimen is 6.35 mm, and the length of the parallel portion is 25.4 mm. Note that, the axial direction of the round bar specimen is to be parallel to the axial direction of the round steel bar.

A test solution containing 25% NaCl (sodium chloride) by mass, 10 mM of $CH_3COONa$ (sodium acetate), and $CH_3COOH$ (acetic acid) with a pH of 4.5 is prepared. A stress equivalent to 90% of the actual yield stress is applied to the round bar specimen. The test solution at 24°C is poured into a test vessel in a manner so that the round bar specimen to which the stress has been applied is immersed therein, and this is adopted as a test bath. The test bath is degassed. A gas consisting of $H_2S$ at 0.03 bar and $CO_2$ at 0.97 bar is blown into the test bath after degassing to saturate the test bath with $H_2S$ gas. The test bath saturated with $H_2S$ gas is held at 24°C for 720 hours.

After the test specimen has been held for 720 hours, the surface of the test specimen is observed with a magnifying glass with a magnification of $10\times$ to check for the presence of cracking. If a place where cracking is suspected is found in the observation with a magnifying glass, a cross section at the place where cracking is suspected is observed using an optical microscope at a magnification of $100\times$ to confirm whether or not there is cracking.

The round steel bar of the present embodiment has excellent SSC resistance while also having a yield strength of 125 ksi (862 MPa) or more. Here, the phrase "has excellent SSC resistance" means that in the aforementioned SSC resistance evaluation test conducted in accordance with NACE TM0177-2016 Method A, cracking is not confirmed after 720 hours elapses. In the present description, the phrase "cracking is not confirmed" means that cracking is not confirmed in a case where the test specimen after the test is observed with a magnifying glass with a magnification of $10\times$ and an optical microscope at a magnification of $100\times$.

Note that, the test conditions for the SSC resistance evaluation test described above are more severe conditions than the test conditions for an SSC resistance evaluation test that is presented in Patent Literature 1. In Patent Literature 1, an SSC resistance evaluation test is conducted in which a 20% NaCl aqueous solution is adopted as a test bath, and a gaseous mixture of $H_2S$ gas at 0.05 bar and $CO_2$ gas at 0.95 bar is blown into the test bath to saturate the test bath.

[SCC resistance evaluation method]

The SCC resistance of the martensitic stainless steel round bar of the present embodiment is evaluated by a four-point bending test in accordance with ASTM G39-2016. Specifically, a rectangular test specimen is taken from the center position in the cross section perpendicular to the axial direction of the martensitic stainless steel round bar. The rectangular test specimen is to be taken so as to have a size with a thickness of 2 mm, a width of 10 mm, and a length of 75 mm. The axial direction of the rectangular test specimen is to be parallel to the axial direction of the round steel bar. A central axis that is parallel to the longitudinal direction of the rectangular test specimen coincides with the central axis of the martensitic stainless steel round bar.

In accordance with ASTM G39-2016, a stress corresponding to 100% of the actual yield stress (AYS) is applied to the rectangular test specimen by four-point bending.

An autoclave at 175°C in which $H_2S$ at 0.03 bar and $CO_2$ at 30 bar were charged under pressurization is prepared. The rectangular test specimen to which stress was applied as described above is placed in the autoclave. Further, inside the autoclave, the rectangular test specimen is immersed in a test solution for 720 hours. An aqueous solution containing 25% NaCl (sodium chloride) by mass and 0.10 g/L of $NaHCO_3$ (sodium hydrogen carbonate) with a pH of 4.5 is adopted as the test solution.

After the test specimen is immersed for 720 hours, the surface of the test specimen is observed with a magnifying glass with a magnification of $10\times$ to check for the presence of cracking. If a place where cracking is suspected is found in the observation with a magnifying glass, a cross section at the place where cracking is suspected is observed with an optical microscope at a magnification of $100\times$ to confirm whether or not there is cracking.

The martensitic stainless steel round bar of the present embodiment has excellent SCC resistance in an environment of 175°C, while also having a yield strength of 125 ksi (862 MPa) or more. Here, the phrase "has excellent SCC resistance in an environment of 175°C" means that, in the aforementioned SCC resistance evaluation test carried out in accordance with ASTM G39-2016, cracking is not confirmed after 720 hours elapses in an environment of 175°C.

[Uses of martensitic stainless steel round bar]

The martensitic stainless steel round bar of the present embodiment is suitable as a starting material for downhole tools. For example, downhole tools are tools used for oil well exploration and oil well drilling applications. Examples of downhole tools include a plug, a packer, and a drill bit. A plug or a packer is used to plug a predetermined area within an oil well hole in order to perform fracturing. Drill bits are used for drilling oil well holes.

Note that, the martensitic stainless steel round bar of the present embodiment may also be used for applications other than for use for downhole tools.

[Production method]

One example of a method for producing the martensitic stainless steel round bar of the present embodiment will now be described. Note that, the production method described hereunder is an example, and a method for producing the martensitic stainless steel round bar of the present embodiment is not limited to this production method. That is, as long as the martensitic stainless steel round bar of the present embodiment that is composed as described above can be produced, a method for producing the martensitic stainless steel round bar is not limited to the production method described hereunder. However, the production method described hereunder is a favorable production method for producing the martensitic stainless steel round bar of the present embodiment.

One example of a method for producing the martensitic stainless steel round bar of the present embodiment includes the following process 1 to process 4.

(Process 1) Starting material preparation process
(Process 2) Rough hot working process
(Process 3) Finishing hot working process
(Process 4) Heat treatment process (quenching process and tempering process)

In the tempering process in the heat treatment process of process 4, tempering is performed under the following conditions.

(Conditions in tempering process)

Condition 1: Tempering temperature T is set in the range of 550 to 650°C.
Condition 2: Tempering time t is set in the range of 240 to 600 minutes.
Condition 3: FA (= $\{(T + 273) \times (t/60)^{0.8}\}/(Mo + W)$) is made 1800 or less.
Condition 4: When cooling the round steel bar after the tempering time t has elapsed, the average cooling rate from the tempering temperature T to 200°C is 5.0°C/sec or more.

Hereunder, each process is described in detail.

[(Process 1) Starting material preparation process]

In the starting material preparation process, molten steel in which the content of each element in the chemical composition is within the range of the present embodiment is produced by a well-known steel-making method. A cast piece is produced by a continuous casting process using the produced molten steel. Here, the cast piece is, for example, a bloom. Instead of a cast piece, an ingot may be produced by an ingot-making process using the aforementioned molten steel. The starting material (cast piece or ingot) is produced by the above production process.

[(Process 2) Rough hot working process]

In the rough hot working process, after the starting material (cast piece or ingot) is heated, the starting material is subjected to hot working to produce a billet. The hot working may be hot forging or may be hot rolling.

Although not particularly limited, the heating temperature of the starting material in the rough hot working process is, for example, 1100 to 1300°C. The heated starting material is subjected to hot working to produce a billet. For example, the heated starting material is subjected to hot rolling using a blooming mill to produce a billet. As necessary, the starting material after hot rolling using a blooming mill may be subjected to further hot rolling to produce a billet. In this case, a continuous mill arranged downstream of the blooming mill may be used. Further, the heated starting material may be subjected to hot forging to produce a billet. The billet after hot working is cooled to normal temperature.

[(Process 3) Finishing hot working process]

In the finishing hot working process, after the billet produced in the rough hot working process is heated, the billet is subjected to hot working to produce a round steel bar.

Although not particularly limited, the heating temperature of the billet in the finishing hot working process is, for example, 1100 to 1300°C. The heated billet is subjected to hot working to produce an intermediate round steel bar. For example, the billet is subjected to hot forging to produce an intermediate round steel bar. Alternatively, the billet is subjected to hot rolling using a continuous mill to produce an intermediate round steel bar.

Note that, the finishing hot working process of process 3 may be omitted. That is, the finishing hot working process is an arbitrary process. In a case where the finishing hot working process will not be performed, an intermediate round steel bar is produced in the rough hot working process.

Although not particularly limited, the cumulative reduction of area in process 2 (rough hot working process) and process 3 (finishing hot working process) is, for example, 20 to 70%.

[(Process 4) Heat treatment process]

The heat treatment process includes the following processes.

    (Process 41) Quenching process
    (Process 42) Tempering process

Each process is described hereunder.

[(Process 41) Quenching process]

In the quenching process, the intermediate round steel bar produced in the rough hot working process or finishing hot working process is subjected to quenching. The quenching is performed by a known method.

Specifically, the intermediate round steel bar after the rough hot working process or finishing hot working process is charged into a heat treatment furnace and held at a quenching temperature. The quenching temperature is equal to or higher than the Acs transformation point, and for example is 900 to 1000°C. After being held at the quenching temperature, the intermediate round steel bar is rapidly cooled (quenched).

Although not particularly limited, the holding time at the quenching temperature is, for example, 10 to 60 minutes. The quenching method is, for example, water cooling or oil cooling. The quenching method is not particularly limited. For example, the intermediate round steel bar may be rapidly cooled by being immersed in a water bath or an oil bath, or may be rapidly cooled by shower cooling or mist cooling.

[(Process 42) Tempering process]

The intermediate round steel bar after quenching is further subjected to a tempering process. In the tempering process, the yield strength of the intermediate round steel bar is adjusted. In addition, in the tempering process, the dissolved Mo concentration, dissolved W concentration, and formed amount of Laves phase in the intermediate round steel bar are adjusted so that, at a cross-section center position of the intermediate round steel bar, F1 satisfies Formula (1), and F2 satisfies Formula (2).

The conditions in the tempering process are as follows.

    Condition 1: Tempering temperature T is set in the range of 550 to 650°C.
    Condition 2: Tempering time t is set in the range of 240 to 600 minutes.
    Condition 3: FA (= $\{(T + 273) \times (t/60)^{0.8}\}/(Mo + W)$) is made 1800 or less.
    Condition 4: When cooling the round steel bar after the tempering time t has elapsed, the average cooling rate from the tempering temperature T to 200°C is 5.0°C/sec or more.

Hereunder, each condition is described.

[Regarding condition 1 and condition 2]

In the tempering process, a tempering temperature T is set in the range of 550 to 650°C. Further, a tempering time t is set in the range of 240 to 600 minutes. Here, the term "tempering time t" means the holding time (mins) at the tempering temperature T.

If the tempering time t is less than 240 minutes, in some cases a segregation zone will be present at the center position in the cross section perpendicular to the axial direction of the martensitic stainless steel round bar. In such a case, intermetallic compounds will be excessively present at the center position. As a result, F1 may not satisfy Formula (1) and/or F2 may not satisfy Formula (2).

On the other hand, if the tempering time t is more than 600 minutes, an excessively large amount of Laves phase will form in the martensitic stainless steel round bar containing W. In such a case, F1 may not satisfy Formula (1) and/or F2 may not satisfy Formula (2). Therefore, the tempering time t is to be within the range of 240 to 600 minutes.

[Regarding condition 3]

In the tempering process, on the precondition that the tempering temperature T satisfies condition 1 and the tempering time t satisfies condition 2, in addition, FA that is defined by the following Formula (A) is 1800 or less.

$$FA = \{(T + 273) \times (t/60)^{0.8}\}/(Mo + W))  \quad (A)$$

Where, the tempering temperature T (°C) is substituted for "T" in FA. The tempering time t (mins) is substituted for "t". The content of Mo in percent by mass in the martensitic stainless steel round bar is substituted for "Mo". The content of W in percent by mass in the martensitic stainless steel round bar is substituted for "W".

FA is a parametric equation relating to the formed amount of Laves phase in a martensitic stainless steel round bar containing W in the tempering process. As described above, in a martensitic stainless steel round steel having the chemical composition of the present embodiment, formation of Laves phase is promoted by a synergetic effect between the content of Mo and the content of W. Therefore, formation of Laves phase is appropriately suppressed by tempering the intermediate round steel bar with a heat quantity that depends on the content of Mo and content of W in the round steel bar.

Even if condition 1, condition 2, and condition 4 are satisfied, if FA is more than 1800, Laves phase will excessively form in the round steel bar. In such case, even if F1 satisfies Formula (1), F2 will not satisfy Formula (2).

If FA is 1800 or less, on the precondition that condition 1, condition 2, and condition 4 are satisfied, formation of Laves phase in the round steel bar will be sufficiently suppressed. As a result, in the round steel bar, F1 will satisfy Formula (1), and F2 will satisfy Formula (2).

A preferable upper limit of FA is 1750, and more preferably is 1700. The lower limit of FA is not particularly limited. The lower limit of FA is, for example, 900, or for example is 950.

[Regarding condition 4]

In the tempering process, in addition, after the tempering time t has elapsed, the intermediate round steel bar is cooled, and the average cooling rate from the tempering temperature T to 200°C is made 5.0°C/sec or more.

Even in a case where condition 1 to condition 3 are satisfied, if the average cooling rate from the tempering temperature T to 200°C is less than 5.0°C/sec when cooling the intermediate round steel bar after the tempering time t has elapsed, a large amount of Laves phase will form due to the aforementioned synergetic effect between Mo and W. In such case, F1 may not satisfy Formula (1) and/or F2 may not satisfy Formula (2). By making the average cooling rate 5.0°C/sec or more, formation of Laves phase in the cooling process can be sufficiently suppressed.

A preferable lower limit of the average cooling rate is 5.5°C/sec, and more preferably is 6.0°C/sec.

The average cooling rate can be determined by the following method. The surface temperature of the intermediate round steel bar in the cooling process is measured using a thermometer, such as a thermographic thermometer. The time taken for the surface temperature of the intermediate round steel bar to decrease from the tempering temperature T to 200°C is measured. The average cooling rate is determined based on the measured time.

Note that, by appropriately adjusting the tempering conditions to be within a range whereby condition 1 to condition 4 are satisfied, the yield strength of a martensitic stainless steel round bar having the chemical composition of Characteristic 1 that is described above can be adjusted to 125 ksi (862 MPa) or more.

The martensitic stainless steel round bar of the present embodiment can be produced by the process described above.

EXAMPLES

The advantageous effect of one aspect of the martensitic stainless steel round bar of the present embodiment will be described more specifically by way of examples. The conditions adopted in the following examples are one example of conditions employed for confirming the workability and advantageous effects of the martensitic stainless steel round bar of the present embodiment. Accordingly, the martensitic stainless steel round bar of the present embodiment is not limited to this one example of the conditions.

[Production of round steel bars]

Martensitic stainless steel round bars having the chemical compositions shown in Table 1-1 and Table 1-2 were produced.

[Table 1-1]

TABLE 1-1

| Steel Number | Chemical Composition (unit is mass%; balance is Fe and impurities) | | | | | | | | | | | |
|---|---|---|---|---|---|---|---|---|---|---|---|---|
| | Essential Elements | | | | | | | | | | | |
| | C | Si | Mn | P | S | Cr | Ni | Mo | Cu | w | Co | Ti |
| 1 | 0.015 | 0.23 | 0.39 | 0.015 | 0.0007 | 13.22 | 6.18 | 2.65 | 2.15 | 0.18 | 0.188 | 0.125 |
| 2 | 0.010 | 0.21 | 0.41 | 0.017 | 0.0006 | 13.09 | 6.05 | 2.74 | 2.03 | 0.19 | 0.205 | 0.105 |
| 3 | 0.008 | 0.24 | 0.42 | 0.016 | 0.0008 | 13.02 | 6.01 | 2.51 | 2.04 | 0.32 | 0.088 | 0.095 |
| 4 | 0.018 | 0.22 | 0.35 | 0.015 | 0.0008 | 13.08 | 7.06 | 3.06 | 1.88 | 0.05 | 0.194 | 0.108 |
| 5 | 0.011 | 0.22 | 0.43 | 0.017 | 0.0006 | 13.52 | 6.12 | 2.72 | 2.12 | 0.45 | 0.175 | 0.106 |
| 6 | 0.012 | 0.23 | 0.40 | 0.016 | 0.0005 | 13.55 | 6.03 | 2.53 | 2.03 | 0.32 | 0.094 | 0.097 |
| 7 | 0.011 | 0.22 | 0.41 | 0.016 | 0.0006 | 13.58 | 6.03 | 2.72 | 2.01 | 0.28 | 0.146 | 0.112 |
| 8 | 0.012 | 0.25 | 0.39 | 0.014 | 0.0005 | 13.02 | 5.99 | 2.52 | 3.01 | 0.24 | 0.092 | 0.108 |
| 9 | 0.007 | 0.24 | 0.41 | 0.016 | 0.0003 | 12.98 | 6.04 | 2.52 | 2.02 | 0.22 | 0.114 | 0.102 |
| 10 | 0.012 | 0.24 | 0.42 | 0.015 | 0.0010 | 13.12 | 6.06 | 2.12 | 2.13 | 0.15 | 0.156 | 0.102 |
| 11 | 0.013 | 0.25 | 0.43 | 0.016 | 0.0005 | 12.02 | 7.00 | 2.96 | - | - | 0.230 | 0.087 |
| 12 | 0.011 | 0.24 | 0.38 | 0.015 | 0.0012 | 12.86 | 6.23 | 2.68 | 1.98 | - | 0.108 | 0.112 |
| 13 | 0.012 | 0.24 | 0.41 | 0.015 | 0.0006 | 12.78 | 6.18 | 2.61 | 2.23 | 0.20 | - | 0.114 |
| 14 | 0.011 | 0.24 | 0.40 | 0.015 | 0.0008 | 13.18 | 6.15 | 2.65 | 0.88 | 0.25 | 0.196 | 0.115 |

[Table 1-2]

TABLE 1-2

| Steel Number | Chemical Composition (unit is mass%; balance is Fe and impurities) | | | | | | | | | | | | F0 |
| --- | --- | --- | --- | --- | --- | --- | --- | --- | --- | --- | --- | --- | --- |
| | Essential Elements | | | | | Optional Elements | | | | | | | |
| | | | | | | First Group | | | | Second Group | | | |
| | V | Ca | Al | N | O | Nb | Sn | As | Sb | B | Mg | REM | |
| 1 | 0.05 | 0.0018 | 0.038 | 0.0082 | 0.002 | - | - | - | - | - | - | - | 2.74 |
| 2 | 0.05 | 0.0011 | 0.022 | 0.0088 | 0.004 | - | 0.002 | - | - | - | - | - | 2.84 |
| 3 | 0.06 | 0.0021 | 0.018 | 0.0068 | 0.005 | - | - | 0.002 | - | - | - | - | 2.67 |
| 4 | 0.04 | 0.0022 | 0.031 | 0.0083 | 0.003 | 0.01 | - | - | - | - | - | - | 3.09 |
| 5 | 0.05 | 0.0019 | 0.027 | 0.0087 | 0.004 | 0.01 | - | - | - | 0.0005 | - | - | 2.95 |
| 6 | 0.05 | 0.0024 | 0.026 | 0.0086 | 0.003 | - | - | - | - | - | - | 0.001 | 2.69 |
| 7 | 0.04 | 0.0025 | 0.032 | 0.0071 | 0.003 | - | - | - | - | 0.0004 | - | 0.002 | 2.86 |
| 8 | 0.05 | 0.0008 | 0.021 | 0.0092 | 0.003 | - | - | - | - | - | 0.0016 | - | 2.64 |
| 9 | 0.05 | 0.0023 | 0.022 | 0.0075 | 0.004 | - | - | - | 0.002 | - | - | - | 2.63 |
| 10 | 0.04 | 0.0024 | 0.032 | 0.0074 | 0.005 | - | - | - | - | - | - | - | 2.20 |
| 11 | 0.05 | 0.0020 | 0.025 | 0.0110 | 0.003 | 0.01 | - | - | - | 0.0003 | - | - | 2.96 |
| 12 | 0.05 | 0.0035 | 0.028 | 0.0086 | 0.003 | - | - | - | - | - | - | - | 2.68 |
| 13 | 0.05 | 0.0033 | 0.035 | 0.0121 | 0.005 | - | - | - | - | - | - | - | 2.71 |
| 14 | 0.06 | 0.0022 | 0.003 | 0.0082 | 0.004 | - | - | - | - | - | - | - | 2.78 |

The symbol "-" in Table 1-1 and Table 1-2 means that the resulting value was 0% when a fraction of a significant figure (a numerical value to the smallest digit) of the content of an element defined as described above was rounded off. For example, the symbol "-" means that the content of Nb in Steel No. 1 was rounded to the second decimal place to be 0%.

[Starting material preparation process and rough hot working process]

Specifically, blooms were produced by continuous casting using the respective molten steels. Next, each bloom was subjected to hot rolling in a rough hot working process to produce a cylindrical billet (round billet). The heating temperature of the blooms in the rough hot working process was in the range of 1100 to 1300°C.

[Finishing hot working process]

The round billet of each test number was subjected to a finishing hot working process. Specifically, the round billet of each test number was heated to 1100 to 1300°C. The round billets after heating were subjected to hot rolling to produce intermediate round steel bars having diameters ranging from 152.4 to 228.6 mm. The cumulative reduction of area in the rough hot working process and finishing hot working process ranged from 20 to 70%.

[Quenching process]

Each produced intermediate round steel bar was subjected to a quenching process. The quenching temperature (°C) was as shown in Table 2, and the holding time at the quenching temperature was 30 minutes. After the holding time elapsed, the intermediate round steel bar was water-cooled.

[Table 2]

TABLE 2

| Test Number | Steel Number | Quenching Temperature (°C) | Tempering Temperature T (°C) | Tempering Time t (mins) | FA | Average Cooling Rate (°C/sec) |
|---|---|---|---|---|---|---|
| 1 | 1 | 950 | 600 | 480 | 1628 | ≥5.0 |
| 2 | 1 | 950 | 600 | 300 | 1118 | ≥5.0 |
| 3 | 2 | 950 | 580 | 480 | 1537 | ≥5.0 |
| 4 | 3 | 950 | 580 | 300 | 1092 | ≥5.0 |
| 5 | 4 | 950 | 560 | 300 | 971 | ≥5.0 |
| 6 | 5 | 950 | 600 | 480 | 1454 | ≥5.0 |
| 7 | 6 | 920 | 580 | 270 | 997 | ≥5.0 |
| 8 | 7 | 920 | 560 | 270 | 925 | ≥5.0 |
| 9 | 8 | 920 | 610 | 300 | 1159 | ≥5.0 |
| 10 | 9 | 920 | 560 | 300 | 1102 | ≥5.0 |
| 11 | 9 | 920 | 580 | 300 | 1128 | ≥5.0 |
| 12 | 10 | 950 | 600 | 270 | 1281 | ≥5.0 |
| 13 | 11 | 950 | 600 | 480 | 1557 | ≥5.0 |
| 14 | 12 | 950 | 620 | 480 | 1759 | ≥5.0 |
| 15 | 13 | 950 | 600 | 480 | 1640 | ≥5.0 |
| 16 | 14 | 950 | 600 | 480 | 1589 | ≥5.0 |
| 17 | 8 | 920 | 610 | 780 | 2490 | ≥5.0 |

(continued)

| Test Number | Steel Number | Quenching Temperature (°C) | Tempering Temperature T (°C) | Tempering Time t (mins) | FA | Average Cooling Rate (°C/sec) |
|---|---|---|---|---|---|---|
| 18 | 9 | 920 | 560 | 780 | 2366 | ≥5.0 |
| 19 | 1 | 950 | 600 | 780 | 2401 | ≥5.0 |
| 20 | 1 | 950 | 600 | 480 | 1628 | <5.0 |
| 21 | 5 | 950 | 600 | 480 | 1454 | <5.0 |
| 22 | 1 | 950 | 620 | 580 | 1938 | ≥5.0 |
| 23 | 3 | 950 | 610 | 540 | 1810 | ≥5.0 |
| 24 | 1 | 950 | 600 | 200 | 808 | ≥5.0 |
| 25 | 2 | 950 | 580 | 220 | 823 | ≥5.0 |
| 26 | 2 | 950 | 600 | 43 | 228 | ≥5.0 |

[Tempering process]

The intermediate round steel bar after the quenching process was subjected to tempering. The tempering temperature T (°C), tempering time t (mins), FA, and the average cooling rate (°C/sec) from the tempering temperature T to 200°C of the intermediate round steel bar after the tempering time t elapsed were as shown in Table 2. In the column "Average Cooling Rate (°C/sec)" in Table 2, "≥ 5.0" means that the cooling rate was 5.0°C/sec or more. Further, "< 5.0" means that the cooling rate was less than 5.0°C/sec. In the quenching process and tempering process, the yield strength of the round steel bar was adjusted so as to be 862 MPa or more.

A martensitic stainless steel round bar of each test number was produced by the above production process.

[Evaluation tests]

The martensitic stainless steel round bar of each test number was subjected to the following evaluation tests.

(Test 1) Yield strength determination test
(Test 2) Test to determine $[Mo]_C$, $[W]_C$, $[Mo]_R$, and $[W]_R$
(Test 3) Microstructure determination test
(Test 4) SSC resistance evaluation test
(Test 5) SCC resistance evaluation test

Each evaluation test is described hereunder.

[(Test 1) Yield strength determination test]

The yield strength of the martensitic stainless steel round bar of each test number was determined based on [Method for measuring yield strength] that is described above. Note that, a round bar tensile test specimen having a parallel portion with a diameter of 6.0 mm, and a gage length of 30.0 mm was adopted as the tensile test specimen. The axial direction of the parallel portion of the round bar tensile test specimen was made parallel to the axial direction of the martensitic stainless steel round bar. The obtained yield strength (MPa) is shown in the column "YS (MPa)" in Table 3.

[Table 3]

TABLE 3

| Test Number | YS (MPa) | $[Mo]_c$ (mass%) | $[W]_c$ (mass%) | $[Mo]_R$ (mass%) | $[W]_R$ (mass%) | F1 | F2 | SSC Resistance | 150°C SCC Resistance | 175°C SCC Resistance | Remarks |
|---|---|---|---|---|---|---|---|---|---|---|---|
| 1 | 963 | 2.53 | 0.16 | 0.12 | 0.02 | 2.61 | 18.6 | P | P | P | Inventive Example of Present Invention |
| 2 | 988 | 2.56 | 0.17 | 0.09 | 0.01 | 2.65 | 26.5 | P | P | P | Inventive Example of Present Invention |
| 3 | 905 | 2.57 | 0.17 | 0.17 | 0.02 | 2.66 | 14.0 | P | P | P | Inventive Example of Present Invention |
| 4 | 912 | 2.37 | 0.30 | 0.14 | 0.02 | 2.52 | 15.8 | P | P | P | Inventive Example of Present Invention |
| 5 | 880 | 2.85 | 0.04 | 0.21 | 0.01 | 2.87 | 13.0 | P | P | P | Inventive Example of Present Invention |
| 6 | 915 | 2.56 | 0.41 | 0.16 | 0.04 | 2.77 | 13.9 | P | P | P | Inventive Example of Present Invention |
| 7 | 923 | 2.41 | 0.27 | 0.12 | 0.05 | 2.55 | 15.0 | P | P | P | Inventive Example of Present Invention |
| 8 | 918 | 2.59 | 0.27 | 0.13 | 0.01 | 2.73 | 19.5 | P | P | P | Inventive Example of Present Invention |
| 9 | 952 | 2.42 | 0.23 | 0.10 | 0.01 | 2.54 | 23.1 | P | P | P | Inventive Example of Present Invention |
| 10 | 905 | 2.41 | 0.20 | 0.11 | 0.02 | 2.51 | 19.3 | P | P | P | Inventive Example of Present Invention |
| 11 | 885 | 2.39 | 0.17 | 0.13 | 0.05 | 2.48 | 13.8 | P | P | P | Inventive Example of Present Invention |
| 12 | 945 | 2.04 | 0.14 | 0.08 | 0.01 | 2.11 | 23.4 | F | P | P | Comparative Example |
| 13 | 884 | 2.74 | 0.00 | 0.22 | 0.00 | 2.74 | 12.5 | P | P | F | Comparative Example |
| 14 | 910 | 2.55 | 0.00 | 0.13 | 0.00 | 2.55 | 19.6 | F | P | P | Comparative Example |
| 15 | 808 | 2.50 | 0.18 | 0.11 | 0.02 | 2.59 | 19.9 | P | P | P | Comparative Example |
| 16 | 878 | 2.51 | 0.22 | 0.14 | 0.03 | 2.62 | 15.4 | P | P | F | Comparative Example |

| Test Number | YS (MPa) | [Mo]$_c$ (mass%) | [W]$_c$ (mass%) | [Mo]$_R$ (mass%) | [W]$_R$ (mass%) | F1 | F2 | SSC Resistance | 150°C SCC Resistance | 175°C SCC Resistance | Remarks |
|---|---|---|---|---|---|---|---|---|---|---|---|
| 17 | 865 | 2.28 | 0.18 | 0.24 | 0.06 | 2.37 | 7.9 | F | P | P | Comparative Example |
| 18 | 878 | 2.37 | 0.18 | 0.15 | 0.04 | 2.46 | 12.9 | F | P | P | Comparative Example |
| 19 | 886 | 2.39 | 0.15 | 0.26 | 0.03 | 2.47 | 8.5 | F | P | P | Comparative Example |
| 20 | 963 | 2.38 | 0.15 | 0.27 | 0.03 | 2.46 | 8.2 | F | P | P | Comparative Example |
| 21 | 915 | 2.31 | 0.23 | 0.41 | 0.22 | 2.43 | 3.9 | F | P | P | Comparative Example |
| 22 | 878 | 2.40 | 0.14 | 0.25 | 0.04 | 2.47 | 8.5 | F | P | P | Comparative Example |
| 23 | 886 | 2.31 | 0.29 | 0.20 | 0.03 | 2.46 | 10.7 | F | P | P | Comparative Example |
| 24 | 1002 | 2.37 | 0.15 | 0.28 | 0.03 | 2.45 | 7.9 | F | P | P | Comparative Example |
| 25 | 932 | 2.36 | 0.08 | 0.38 | 0.11 | 2.40 | 4.9 | F | P | P | Comparative Example |
| 26 | 964 | 2.27 | 0.05 | 0.47 | 0.14 | 2.30 | 3.8 | F | P | P | Comparative Example |

EP 4 424 850 A1

[(Test 2) Test to determine $[Mo]_C$, $[W]_C$, $[Mo]_R$, and $[W]_R$]

For the martensitic stainless steel round bar of each test number, the dissolved Mo concentration $[Mo]c$, dissolved W concentration $[W]c$, Mo concentration $[Mo]_R$ in residue, and W concentration $[W]_R$ in residue were determined based on [Method for determining $[Mo]c$, $[W]c$, $[Mo]_R$, and $[W]_R$] that is described above.

The obtained dissolved Mo concentration $[Mo]c$, dissolved W concentration $[W]c$, Mo concentration $[Mo]_R$ in residue, and W concentration $[W]_R$ in residue are shown in the column "$[Mo]c$ (mass%)", the column "$[W]c$ (mass%)", the column "$[Mo]_R$ (mass%)", and the column "$[W]_R$ (mass%)" in Table 3.

In addition, F1 and F2 were determined based on the dissolved Mo concentration $[Mo]c$, dissolved W concentration $[W]c$, Mo concentration $[Mo]_R$ in residue, and W concentration $[W]_R$ in residue that were determined.

$$F1 = [Mo]c + 0.5[W]c$$

$$F2 = F1/([Mo]_R + [W]_R)$$

The determined F1 and F2 are shown in the column "F1" and the column "F2" in Table 3.

[(Test 3) Microstructure determination test]

The martensite volume ratio in the martensitic stainless steel round bar of each test number was determined based on [Method for measuring volume ratio of martensite] that is described above. Note that, the size of the test specimen used for the X-ray diffractometry was 15 mm × 15 mm × 2 mm in thickness. The thickness direction of the test specimen was the radial direction of the round steel bar. As a result, it was found that in the round steel bars of all of the test numbers, the martensite volume ratio was 80.0% or more and the balance was retained austenite.

[(Test 4) SSC resistance evaluation test]

The SSC resistance of the martensitic stainless steel round bar of each test number was evaluated based on [SSC resistance evaluation method] that is described above. Note that, the diameter of the parallel portion of the round bar specimen was made 6.35 mm, and the length of the parallel portion was made 25.4 mm. The axial direction of the round bar specimen was made parallel to the axial direction of the round steel bar. The evaluation results are shown in the column "SSC resistance" in Table 3. "P" (Pass) in the "SSC resistance" column indicates that cracking was not confirmed after 720 hours elapsed in the SSC resistance evaluation test. "F" (Fail) indicates that cracking was confirmed after 720 hours elapsed in the SSC resistance evaluation test.

[(Test 5) SCC resistance evaluation test]

The martensitic stainless steel round bar of each test number was subjected to the following two SCC resistance evaluation tests.

(Test 51) SCC resistance evaluation test at 150°C
(Test 52) SCC resistance evaluation test at 175°C

Each SCC resistance evaluation test is described hereunder.

[(Test 51) SCC resistance evaluation test at 150°C]

The SCC resistance in an environment of 150°C was evaluated by the following method. A rectangular test specimen was taken from the martensitic stainless steel round bar of each test number by the method described in [SCC resistance evaluation method] that is described above. In accordance with ASTM G39-2016, a stress corresponding to 100% of the actual yield stress (AYS) of the round steel bar was applied to the rectangular test specimen by four-point bending.

An autoclave at 150°C in which $H_2S$ at 0.05 bar and $CO_2$ at 60 bar were charged under pressurization was prepared. The rectangular test specimen to which stress was applied as described above was placed in the autoclave. Further, inside the autoclave, the rectangular test specimen was immersed in a test solution for 720 hours. An aqueous solution containing 20% NaCl (sodium chloride) by mass with a pH of 4.5 was adopted as the test solution.

After the test specimen was immersed for 720 hours, the surface of the test specimen was observed with a magnifying glass with a magnification of 10× to check for the presence of cracking. If a place where cracking was suspected was found in the observation with a magnifying glass, a cross section at the place where cracking was suspected was observed with an optical microscope at a magnification of 100× to confirm whether or not there was cracking.

The evaluation results are shown in the column "150°C SCC resistance" in Table 3. "P" (Pass) in the "150°C SCC Resistance" column indicates that cracking was not confirmed after 720 hours elapsed in the SCC resistance evaluation test at 150°C. The results of the test showed that the steel material of each test number was excellent in SCC resistance in an environment of 150°C.

[(Test 52) SCC resistance evaluation test at 175°C]

The SCC resistance of the martensitic stainless steel round bar of each test number in an environment of 175°C was evaluated by the method described in [SCC resistance evaluation method] that is described above.

The evaluation results are shown in the column "175°C SCC resistance" in Table 3. "P" (Pass) in the "175°C SCC Resistance" column indicates that cracking was not confirmed after 720 hours elapsed in the SCC resistance evaluation test at 175°C. "F" (Fail) indicates that cracking was confirmed after 720 hours elapsed in the SCC resistance evaluation test at 175°C.

[Evaluation results]

Referring to Table 1-1, Table 1-2, Table 2, and Table 3, in Test Nos. 1 to 11, the content of each element in the chemical composition was within the range of the present embodiment. In addition, the production conditions were appropriate. As a result, the martensitic stainless steel round bars satisfied the aforementioned Characteristic 1 to Characteristic 4. That is, in the martensitic stainless steel round bars of these test numbers, the content of each element in the chemical composition was appropriate, and the yield strength was 862 MPa (125 ksi) or more. In addition, F1 was 2.45 or more, and F2 was 13.0 or more.

As a result, even though the martensitic stainless steel round bars of these test numbers had a yield strength of 862 MPa (125 ksi) or more, excellent SSC resistance was obtained and, in addition, excellent SCC resistance in an environment of 175°C was obtained.

On the other hand, in Test No. 12, although the content of each element in the chemical composition was appropriate and the production conditions were appropriate, F0 was less than 2.55, and hence F1 was less than 2.45. Therefore, although the martensitic stainless steel round bar had a yield strength of 862 MPa (125 ksi) or more, excellent SSC resistance was not obtained.

In Test No. 13, the content of Cu and the content of W were low. Therefore, excellent SCC resistance in an environment of 175°C was not obtained.

In Test No. 14, the content of W was low. Therefore, although the martensitic stainless steel round bar had a yield strength of 862 MPa (125 ksi) or more, excellent SSC resistance was not obtained.

In Test No. 15, the content of Co was low. Therefore, the yield strength of the martensitic stainless steel round bar was less than 862 MPa (125 ksi).

In Test No. 16, the content of Cu was low. Therefore, excellent SCC resistance in an environment of 175°C was not obtained.

In Test Nos. 17 to 19, although the chemical composition was appropriate, the tempering time t was too long. As a result, in Test No. 17, F1 was less than 2.45, and F2 was less than 13.0. Further, in Test Nos. 18 and 19, F2 was less than 13.0. Therefore, although the round steel bars of these test numbers had a yield strength of 862 MPa (125 ksi) or more, excellent SSC resistance was not obtained.

In Test Nos. 20 and 21, although the chemical composition was appropriate, the average cooling rate in the tempering process was slow. Therefore, in Test No. 20, F2 was less than 13.0. Further, in Test No. 21, F1 was less than 2.45, and F2 was less than 13.0. Therefore, although the round steel bars of these test numbers had a yield strength of 862 MPa (125 ksi) or more, excellent SSC resistance was not obtained.

In Test Nos. 22 and 23, the chemical composition was appropriate. In addition, the tempering temperature T and the tempering time t in the tempering process were also appropriate. However, FA was too high. Therefore, in these test numbers, F2 was less than 13.0. As a result, although the round steel bars of these test numbers had a yield strength of 862 MPa (125 ksi) or more, excellent SSC resistance was not obtained.

In Test Nos. 24 to 26, although the chemical composition was appropriate, the tempering time t in the tempering process was too short. Therefore, in Test No. 24, F2 was less than 13.0, and in Test Nos. 25 and 26, F1 was less than 2.45 and F2 was less than 13.0. As a result, although the round steel bars of these test numbers had a yield strength of 862 MPa (125 ksi) or more, excellent SSC resistance was not obtained.

An embodiment of the present disclosure has been described above. However, the embodiment described above is merely an example for carrying out the present disclosure. Therefore, the present disclosure is not limited to the above-described embodiment, and can be implemented by appropriately modifying the above-described embodiment within a range not departing from the spirit thereof.

The gist of the martensitic stainless steel round bar of the present embodiment can also be described as follows.

[1] A martensitic stainless steel round bar that has a chemical composition consisting of, in mass%,

> C: 0.030% or less,
> Si: 1.00% or less,
> Mn: 1.00% or less,
> P: 0.030% or less,
> S: 0.0100% or less,
> Cr: 10.00 to 14.00%,
> Ni: 5.00 to 7.50%,
> Mo: 1.50 to 4.00%,
> Cu: 1.00 to 3.50%,
> W: 0.01 to 2.00%,
> Co: 0.010 to 0.500%,
> Ti: 0.050 to 0.300%,
> V: 0.01 to 0.10%,
> Ca: 0.0005 to 0.0100%,
> Al: 0.001 to 0.100%,
> N: 0.0500% or less, and
> O: 0.050% or less,
> with the balance being Fe and impurities,
> wherein:

> a yield strength is 862 MPa or more; and
> when, at a center position of a cross section perpendicular to an axial direction of the martensitic stainless steel round bar,
> a dissolved Mo concentration in percent by mass is defined as $[Mo]c$,
> a dissolved W concentration in percent by mass is defined as $[W]c$,
> an Mo concentration in percent by mass in a residue obtained by constant-current electrolysis is defined as $[Mo]_R$, and
> a W concentration in percent by mass in the residue is defined as $[W]_R$,
> Formula (1) and Formula (2) are satisfied.

$$F1 = [Mo]c + 0.5[W]c \geq 2.45 \quad (1)$$

$$F2 = F1/([Mo]_R + [W]_R) \geq 13.0 \quad (2)$$

[2] A martensitic stainless steel round bar that has a chemical composition consisting of, in mass%,

> C: 0.030% or less,
> Si: 1.00% or less,
> Mn: 1.00% or less,
> P: 0.030% or less,
> S: 0.0100% or less,
> Cr: 10.00 to 14.00%,
> Ni: 5.00 to 7.50%,
> Mo: 1.50 to 4.00%,
> Cu: 1.00 to 3.50%,
> W: 0.01 to 2.00%,
> Co: 0.010 to 0.500%,

Ti: 0.050 to 0.300%,
V: 0.01 to 0.10%,
Ca: 0.0005 to 0.0100%,
Al: 0.001 to 0.100%,
N: 0.0500% or less, and
O: 0.050% or less,
and further containing one or more kinds of element selected from a group consisting of a first group and a second group,
with the balance being Fe and impurities,
wherein:

a yield strength is 862 MPa or more; and
when, at a center position of a cross section perpendicular to an axial direction of the martensitic stainless steel round bar,
a dissolved Mo concentration in percent by mass is defined as $[Mo]_c$,
a dissolved W concentration in percent by mass is defined as $[W]_c$,
an Mo concentration in percent by mass in a residue obtained by constant-current electrolysis is defined as $[Mo]_R$, and
a W concentration in percent by mass in the residue is defined as $[W]_R$,
Formula (1) and Formula (2) are satisfied;
[first group]
one or more kinds of element selected from a group consisting of:

Nb: 0.05% or less,
Sn: 0.010% or less,
As: 0.010% or less, and
Sb: 0 to 0.010%;
[second group]

one or more kinds of element selected from a group consisting of:

B: 0.0050% or less,
Mg: 0.0100% or less, and
rare earth metal: 0 to 0.010%.

$$F1 = [Mo]_C + 0.5[W]_C \geq 2.45 \quad (1)$$

$$F2 = F1/([Mo]_R + [W]_R) \geq 13.0 \quad (2)$$

[3] The martensitic stainless steel round bar according to [2], containing:
the first group.
[4] The martensitic stainless steel round bar according to [2] or [3], containing:
the second group.

**Claims**

1. A martensitic stainless steel round bar that has a chemical composition consisting of, in mass%,

C: 0.030% or less,
Si: 1.00% or less,
Mn: 1.00% or less,
P: 0.030% or less,
S: 0.0100% or less,
Cr: 10.00 to 14.00%,
Ni: 5.00 to 7.50%,

Mo: 1.50 to 4.00%,
Cu: 1.00 to 3.50%,
W: 0.01 to 2.00%,
Co: 0.010 to 0.500%,
Ti: 0.050 to 0.300%,
V: 0.01 to 0.10%,
Ca: 0.0005 to 0.0100%,
Al: 0.001 to 0.100%,
N: 0.0500% or less,
O: 0.050% or less,
Nb: 0 to 0.05%,
Sn: 0 to 0.010%,
As: 0 to 0.010%,
Sb: 0 to 0.010%,
B: 0 to 0.0050%,
Mg: 0 to 0.0100%,
rare earth metal: 0 to 0.010%, and
the balance: Fe and impurities,
wherein:

a yield strength is 862 MPa or more; and
when, at a center position of a cross section perpendicular to an axial direction of the martensitic stainless steel round bar,
a dissolved Mo concentration in percent by mass is defined as $[Mo]_c$,
a dissolved W concentration in percent by mass is defined as $[W]_c$,
an Mo concentration in percent by mass in a residue obtained by constant-current electrolysis is defined as $[Mo]_R$, and
a W concentration in percent by mass in the residue is defined as $[W]_R$,
Formula (1) and Formula (2) are satisfied.

$$F1 = [Mo]_C + 0.5[W]_C \geq 2.45 \quad (1)$$

$$F2 = F1/([Mo]_R + [W]_R) \geq 13.0 \quad (2)$$

2.  The martensitic stainless steel round bar according to claim 1, wherein the chemical composition contains one or more elements selected from a group consisting of:

Nb: 0.01 to 0.05%,
Sn: 0.001 to 0.010%,
As: 0.001 to 0.010%,
Sb: 0.001 to 0.010%,
B: 0.0001 to 0.0050%,
Mg: 0.0001 to 0.0100%, and
rare earth metal: 0.001 to 0.010%.

FIG. 1

FIG. 2

## INTERNATIONAL SEARCH REPORT

International application No.

**PCT/JP2022/039622**

### A. CLASSIFICATION OF SUBJECT MATTER

*C21D 8/06*(2006.01)i; *C22C 38/00*(2006.01)i; *C22C 38/60*(2006.01)i
FI:   C22C38/00 302Z; C22C38/60; C21D8/06 B

According to International Patent Classification (IPC) or to both national classification and IPC

### B. FIELDS SEARCHED

Minimum documentation searched (classification system followed by classification symbols)

C21D8/06; C22C38/00-38/60

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2020/067247 A1 (NIPPON STEEL CORP.) 02 April 2020 (2020-04-02)<br>claims, tables | 1-2 |
| A | WO 2020/071344 A1 (NIPPON STEEL CORP.) 09 April 2020 (2020-04-09)<br>claims, tables | 1-2 |
| A | WO 2021/199368 A1 (NIPPON STEEL CORP.) 07 October 2021 (2021-10-07)<br>entire text | 1-2 |
| P, A | WO 2022/202913 A1 (NIPPON STEEL CORP.) 29 September 2022 (2022-09-29)<br>claims, tables | 1-2 |

☐ Further documents are listed in the continuation of Box C.    ☑ See patent family annex.

| | |
|---|---|
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **12 December 2022** | **27 December 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/039622**

| Patent document cited in search report | | | Publication date (day/month/year) | Patent family member(s) | | | Publication date (day/month/year) |
|---|---|---|---|---|---|---|---|
| WO | 2020/067247 | A1 | 02 April 2020 | US | 2021/0238705 | A1 | |
| | | | | claims, tables | | | |
| | | | | EP | 3859031 | A1 | |
| WO | 2020/071344 | A1 | 09 April 2020 | US | 2021/0317556 | A1 | |
| | | | | claims, tables | | | |
| | | | | EP | 3862451 | A1 | |
| WO | 2021/199368 | A1 | 07 October 2021 | BR | 112022019162 | A2 | |
| | | | | entire text | | | |
| WO | 2022/202913 | A1 | 29 September 2022 | JP | 7151945 | B1 | |
| | | | | claims, tables | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017200083 A